# EUROPEAN PATENT SPECIFICATION

(11) **EP 3 240 959 B1**
(45) Date of publication and mention of the grant of the patent: **23.06.2021**
(21) Application number: 14909567.1
(22) Date of filing: 30.12.2014
(51) Int. Cl.: F16B 1/00, F16B 17/00, F16B 2/24, F16B 5/06, F16B 7/22, F16B 21/07, F16B 21/20

(54) **A FASTENING DEVICE FOR PUSH-IN COUPLING AND PRODUCTS THEREOF**
BEFESTIGUNGSVORRICHTUNG FÜR EINSTECKKUPPLUNG UND PRODUKTE DARAUS
DISPOSITIF DE FIXATION POUR COUPLAGE PAR POUSSÉE ET SES PRODUITS

(43) Date of publication of application: 08.11.2017
(73) Proprietor: UPM-Kymmene Corporation, 00100 Helsinki (FI)
(72) Inventor: NURMINEN, Ari, 15700 Lahti (FI)
(74) Representative: Berggren Oy
(86) International application number: PCT/FI2014/051064
(87) International publication number: WO 2016/107960

(56) References cited:
- EP-A2- 1 930 668
- DE-A1- 3 408 600
- US-A- 1 998 049
- US-A- 3 643 989
- US-B2- 8 627 552
- None

## Description

### FIELD

The invention relates to a fastening device for interlocking push-in coupling between polymer containing products, and a combination suitable to be used for forming one or more interlocking push-in couplings.

### BACKGROUND

Polymers can be used for manufacturing polymer containing products. Polymers can be used for manufacturing composite products, which may be polymer containing products. A composite product may comprise at least one kind of polymer used as a matrix material, such as thermoplastic polymer, and another constituent material, such as organic natural fiber based material. Such composite products may be produced from melt material, wherein the mixing and melting of the materials results in a composite material with properties differing from the properties of the individual constituent materials.

The variety of polymer matrix materials available enables optimization of the properties and shape of the formed product. Properties and shape of the product may be selected based on suitability for end use application. A polymer containing product may be formed into a shape during the manufacturing process, for example by extrusion or moulding, such as by an extrusion die, in a mould cavity or on a mould surface. The polymer containing product may be shaped later, for example by cutting or trimming. Polymer containing products can be used for various industrial applications. The formed product may be used for several purposes, both indoors and outdoors. A polymer composite product may be used as an element for various purposes. For example, a composite product may be used as an element on a sealing, a wall or a floor. The composite product may be used as a shaped element, for example, as a panel or a board. The elements may be used to build an assembly, such as a furniture, a deck, a cabinet, a desk, a patio or a fence, to name a few. Polymer containing composite material is increasingly used to replace more traditional materials, such as metal or wood. In furniture and construction elements, composite product may be used to replace wooden structures. An advantage of the manufacturing process of a polymer containing product is, that the product may be formed in a cost efficient manner having designed dimensions and a shape, such that it may be used for a dedicated purpose. The formed shape may have a specific function in an assembly or a construction.

Another advantage of products consisting of composite or plastic material is that such materials and manufacturing methods enable production of shaped products having less weight. The materials may replace heavier materials, such as wood or metal. The interior of the polymer containing product may be manufactured to comprise voids or hollow sections, which reduce weight of the product. While the weight interior of the polymer containing product is reduced, the formed product comprising hollow parts may be mechanically stable and have desired end use qualities, such as dimensional stability or reduced moisture uptake.

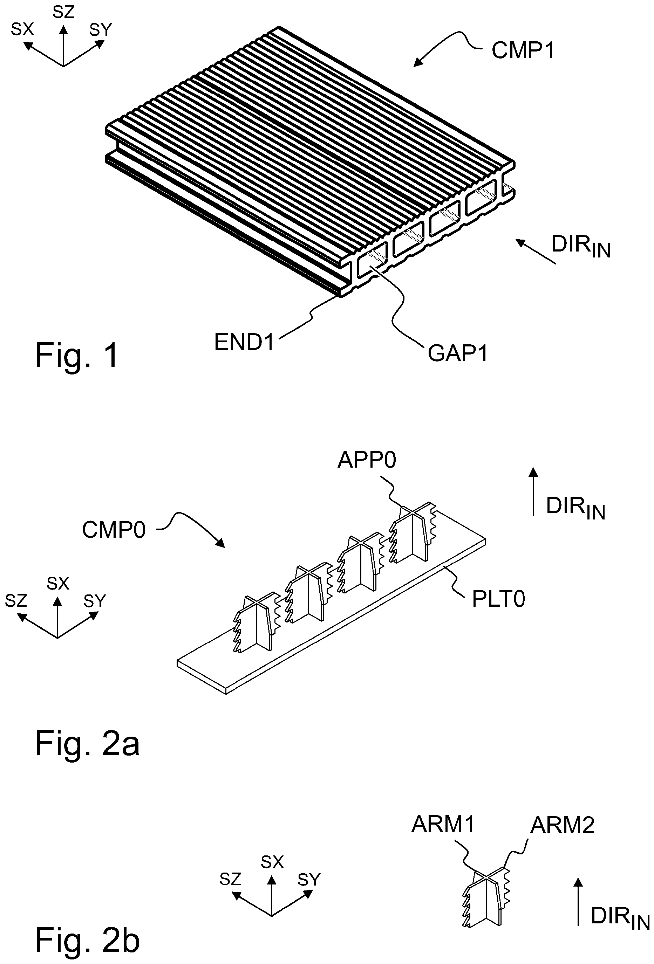

Referring to Fig. 1, a composite product CMP1 may be manufactured to comprise a body having one or more hollow sections GAP1. The hollow section GAP1 may be a section starting from the end END1 of the composite product CMP1. The hollow section GAP1 may extend through the composite product CMP1. Alternatively, the hollow section GAP1 may be a depression or a void, which ends inside the body. A body with hollow sections GAP1 extending through the whole composite product CMP1 is light in comparison to a solid body. A hollow body enables less use of raw material in the manufacturing process. The end END1 of the composite product CMP1 is typically provided when finishing or shaping a manufactured composite product CMP1, for example by cutting.

A lightweight composite material comprising hollow sections presents challenges. The open end END1 of a composite product CMP1 is exposed to surrounding environments. When used outdoors, the hollow sections may be filled with debris and rainwater. If the outside temperature falls below freezing point of water, ice may be formed which can damage the structure of the composite product CMP1. When used as a decorative element, the exposed end END1 may not be visually appealing.

Often, the composite material comprising hollow sections may be used as a part of an assembly. Fastening of such polymer containing products securely may be challenging. In particular, fastening of a first polymer containing product securely to another polymer containing product comprising hollow sections may be challenging. Due to the relative brittleness of many composite materials, conventional fixing methods using through-holes, such as screws, clinches, bolts and nail, may cause extensive damage or lead to structural damages. Polymer containing materials may absorb water. Water absorbance may cause swelling of the polymer material, such that the dimensions of a product may change. Many polymer containing materials also show thermal expansion, such that products made of polymer containing material may swell and shrink with respect to each other due to temperature fluctuation, when assembled together. When the fixing is arranged by anchoring, such as with screws, the swelling may e.g. cause the product to break or the fixing means to be pulled out. Fixing of a polymer containing product comprising hollow interior structures may be difficult. Conventionally used fixing methods may cause damage to the exposed outer surfaces of a polymer containing product. Conventionally used fastening methods may further be unstable, and fall off. For example, standard adhesive formulations rely on compatible surface energy levels, wherein the adhesive wets out the surface for adhesive bonding. While adhesives may bond with surfaces having high surface energy levels, such as ABS plastics, they often fail to bond with materials having low surface energy levels, such as polyolefins.

Referring to Figs. 2a and 2b, a second polymer containing product CMP0 may be used as an end cap for covering the exposed end END1 of a composite product CMP1. The polymer containing product CMP0 is typically formed of plastic by moulding and may comprise a substantially planar shield plate PLT0. One or more protrusions APP0 may extend vertically from a surface of the shield plate PLT0. The protrusions APP0 may have teethed blades ARM1, ARM2, which are positioned perpendicular to each other. When the protrusion APP0 is pushed into the hollow sections GAP1 of a composite product CMP1, the teethed blades ARM1, ARM2 act as fastening means by pressing against the inside walls of the composite product CMP1 surrounding the hollow section GAP1. The polymer containing product CMP0 comprising the protrusions APP0 is pushed in an insertion direction DIR_{IN}, as showed by the arrow in the figures 1, 2a and 2b.

The composite product CMP1 may endure substantial forces in use, which have an effect on joints connecting two or more products together. A drawback with fastening means as described above is that polymer material is typically viscoelastic and undergoes mechanical relaxation over time. This is in particular a problem with polymer structures which have not been crosslinked. Polymers are also sensitive to temperature, and fastening means relying on functioning of polymer structures may not be suited for use in environments where the composite product CMP1 is used. Therefore, due to temperature variation and/or over time, the grip of the teethed blades ARM1, ARM2 may loosen such that the end cap does not hold in place. Such fastening means are therefore not stable.

The use of traditional fastening means, such as screws, nails, clinchers, rivets and bolts typically require damaging the surface of the composite product CMP1, for example by drilling or puncturing. For proper attachment, the composite product CMP1 may further require substantial strengthening. Specific locations may be required for the use of such fastening means. A hollow section of the composite product CMP1 may not be suited for such fastening, as it may be difficult to fix the fastening means on such sections steadily. Furthermore, traditional fastening means which damage the surface as described above may be visually detected from the surface, which may be undesired for the end application. Traditional fastening means may be inconvenient to use in a combination comprising such composite products CMP1. An example of a fastening device of the prior art is disclosed in US8627552.

### SUMMARY

Some variations may relate to a fastening device for interlocking push-in coupling between polymer containing products. Some not claimed variations may relate to a polymer containing product comprising at least one protrusion suitable for an interlocking push-in coupling. Some variations may relate to a combination suitable to be used for forming one or more interlocking push-in couplings. Some not claimed variations may relate to a method for forming an interlocking push-in coupling between polymer containing products. Some not claimed variations may relate to uses of a fastening device for interlocking push-in coupling. Some not claimed variations may relate to uses of a polymer containing product comprising at least one protrusion suitable for an interlocking push-in coupling. Some not claimed variations may relate to uses of a combination suitable to be used for forming one or more interlocking push-in couplings.

According to a first aspect, there is provided a fastening device for interlocking push-in coupling between polymer containing products of claim 1.

According to a second aspect, there is provided combination comprising a fastening device and a polymer containing product suitable to be used for forming one or more interlocking push-in couplings according to claim 16.

The provided fastening means are suitable for connecting two or more polymer containing products together in a push-in coupling. The fastening device is configured to hold two polymer containing products stably together in the push-in coupling. A combination comprising a fastening device may comprise one or more polymer containing products, which may be connected to one or more fastening devices by an interlocking coupling. When the combination comprising a fastening device comprises a polymer containing product having a hollow section, the interlocking coupling may be inside the hollow section of the polymer containing product. The fastening device is configured to be installed on the polymer containing products such that it does not damage the outer surface of the second polymer containing product comprising the hollow section. In addition of being a non-damaging fastening means, when pushed into the hollow section of the second polymer containing product, the fastening device is also concealed inside the hollow section, such that the fastening device is not visible to the surface of the second polymer containing product.

The fastening device is configured to provide an interlocking push-in coupling between two polymer containing products. The fastening device is configured to function in two consecutive steps. The fastening device may first be mounted on a protrusion of a first polymer containing product comprising at least one protrusion in a first direction. The fastening device may then be inserted into a hollow section of a second polymer containing product comprising at least one hollow section in a second direction, wherein the second direction is parallel to an insertion direction of the first polymer containing product and substantially opposite to the first direction. The fastening device forms a first self-tightening joint when mounted on a protrusion of a first polymer containing product comprising at least one protrusion. The fastening device forms a second self-tightening joint when pushed into a hollow section of a second polymer containing product comprising at least one hollow section. The interlocking nature of the push-in coupling may thus be achieved by a two-directional assembly of the fastening device in two consecutive steps.

The fastening device comprises a base plate, a first pair of blade elements and a second pair of blade elements, wherein the first and second pair of blade elements are connected to the base plate by a first and a second pair of flexible joints. The base plate comprises a first pair of opposite sides, a second pair of opposite sides, a first surface and a second surface for connecting the first and second pair of blade elements. When the fastening device is mounted on the protrusion of the first polymer containing product, the first pair of flexible joints is configured to press the first pair of blade elements against the first polymer containing product to form the first self-tightening joint. When the fastening device is pushed into the hollow section, the second pair of flexible joints is configured to resiliently bend the second pair of blade elements, which enter the hollow section after the second pair of flexible joints. When the fastening device has been pushed into the hollow section of the second polymer containing product, the second pair of flexible joints is configured to press the second pair of blade elements against the second polymer containing product to form the second self-tightening joint.

A not claimed method for forming an interlocking push-in coupling between a first polymer containing product having a protrusion and a second polymer containing product having a hollow section by means of a fastening device may therefore comprise
- mounting the fastening device on the protrusion of the first polymer containing product such that the first pair of flexible joints is configured to press the first pair of blade elements against the first polymer containing product to form a first self-tightening joint; and
- pushing the protrusion of the first polymer containing product comprising the fastening device into the hollow section of the second polymer containing product, such that the second pair of flexible joints is configured to press the second pair of blade elements against the second polymer containing product to form a second self-tightening joint.

Contemplatively, the fastening device could be an insert placed into a mould, such that the fastening device would be integrated into the protrusion of the first polymer containing product already when manufacturing the first polymer containing product. However, such a solution would be an inferior solution, as it is likely that a fastening device integrated into the protrusion would weaken the structure of the polymer containing product. Furthermore, such a solution would likely require an increase in thickness and weight of the protrusion, which would make the manufacturing less cost efficient.

The method for forming an interlocking push-in coupling by means of a separate fastening device enables a simple way of assembling the combination. Assembling the combination may be done by mounting and pushing the components together without additional tools. The method enables assembling the combination without drilling or puncturing the polymer containing products. The method enables assembling a combination comprising hinged connections without additional tools. Assembling the combination may be done manually. The combination may be assembled at a factory. The combination may be assembled by retrofitting together manufactured components suitable for the interlocking push-in coupling as described above.

The first polymer containing product comprises a body having at least one protrusion suitable for an interlocking push-in coupling. The first polymer containing product may comprise a body having two protrusions opposite each other, such that two polymer containing products comprising at least one hollow section each may be connected by means of the protrusions comprising fastening devices as described above. The first polymer containing product may comprise a body having at least one substantially planar side. When the body comprises at least one substantially planar side, the protrusion may extend substantially parallel to the normal of the surface of the substantially planar side. The protrusion may comprise one or more supporting elements below the tip of the protrusion. The protrusion may comprise a cross sectional area resembling a truncated cone, such that the cross sectional area decreases towards the tip of the protrusion, when measured perpendicular to the longitudinal axis of the protrusion. The supporting elements may be configured to act as stoppers for orienting a fastening device. The supporting element may be configured to act as a counterpart for a fastening device. When the fastening device is mounted on the protrusion, the fastening device forms a first self-tightening joint with the protrusion. The fastening device is configured to comprise an insertion direction. The fastening device may thereby also be oriented with respect to the insertion direction. The insertion direction may be substantially parallel with the normal of the first surface of the base plate. The insertion direction is configured to orient the second pair of blade elements, such that when pushed into the second polymer containing product, the second pair of flexible joints enter the hollow section before the edges of the second pair of blade elements.

The interlocking push-in coupling enables an amount of different combinations to be formed. The combination comprising the formed interlocking push-in coupling may be designed to have various shapes. By varying the shape and functioning of the first polymer containing product comprising at least one protrusion, different combinations may be obtained. The first polymer containing product having a protrusion may be used to form an interlocking push-in coupling with a fastening device and a second polymer containing product having a hollow section. The first polymer containing product having a protrusion may be used as a connecting part for one or more second polymer containing products having a hollow section. The first polymer containing product may comprise a body having one or more protrusions suitable for an interlocking push-in coupling. One or more first polymer containing products may be used in a combination also comprising one or more fastening devices. The combination may further comprise one or more second polymer containing products having hollow sections. The first polymer containing product may comprise multiple protrusions such that one or more second polymer containing products comprising the hollow section may be connected into the combination. The first polymer containing product may comprise multiple protrusions, such that at least some of the protrusions are located on a first side and at least some of the protrusions on a second side, such that the assembled combination may comprise one or more angles. The first polymer containing product may comprise two body parts configured to rotate relative to each other about an axis such that the two body parts act as a hinge, which enables the angle between the connected second polymer containing products comprising the hollow section to be varied.

Two or more interlocking push-in couplings in a junction between the two products may be used to improve the holding of the fastening device in direction substantially perpendicular to the insertion direction. The interlocking push-in couplings may be arranged such that the first polymer containing product comprises a body having all the protrusions. Alternatively, some of the interlocking push-in couplings may be arranged in an opposite direction, such that some of the protrusions are on the second polymer containing product and have a hollow section as a counterpart on the first polymer containing product. A push-in coupling between two polymer containing products may act as a hub. The hollow section may act as a hub liner and the protrusion may act as a hub extension. The fastening device may be configured to act as an interlocking part, which prevents the hub extension from slipping out of the hub liner. Furthermore, when the fastening device comprises a first pair and a second pair of self-tightening joints, the fastening device may be configured to prevent axial rotation of the protrusion in the hollow section, such that the polymer containing products do not rotate around the hub. In order to improve the mechanical stability of the junction between the two products, two or more interlocking push-in couplings may be used for connecting the first and the second polymer containing products together. When the first and the second polymer containing products are connected by means of at least two interlocking push-in couplings, each push-in coupling participates in sharing mechanical stress induced on the junction between the two products. In other words, connecting two polymer containing products together by means of two or more interlocking push-in couplings may be used to prevent the axial revolution between the connected products. Simultaneously, the mechanical stress in the junction between the two products may be spread over multiple couplings, such that each interlocking push-in coupling has higher mechanical stability.

The fastening device mounted on a protrusion is intended to be pushed inside a hollow section of a polymer containing product. The material properties and geometrical configuration of the fastening device and the first polymer containing product may selected such that the formed combination may be pushed into the hollow section of the second polymer containing product. The dimensions of the combination comprising the protrusion and the fastening device comprising the second pair of blade elements having a second flexible joint may be designed such that the combination fits into the dimensions of the hollow section. The geometrical configuration of the blade elements in relation to each other and to the base plate enable that the fastening device may be inserted by pushing into the hollow section of the second polymer containing product.

The fastening device may be configured to have reflection symmetry, such that a plane of symmetry parallel to the normal of the first or second surface of the base plate divides the fastening device into two pieces which are mirror images of each other. The reflection symmetry enables a balanced force effect for the first pair of blade elements against the first polymer containing product and the second pair of blade elements against the second polymer containing product, which improve the grip of the fastening device and the orientation of the fastening device in an insertion direction, when the fastening device is pushed into the hollow section of the second polymer containing product.

### BRIEF DESCRIPTION OF THE DRAWINGS

- Fig. 1: shows, by way of example, a three dimensional view of a composite product comprising an exposed end and one or more hollow sections,
- Fig. 2a: shows, by way of example, a three dimensional view of a polymer containing product comprising a substantially planar shield plate and one or more protrusions,
- Fig. 2b: shows, by way of example, in a three dimensional view, a protrusion of a polymer containing product having teethed blades positioned perpendicular to each other,
- Fig. 3a: shows, by way of example, in a three dimensional view, a fastening device according to an embodiment of the invention,
- Fig. 3b: shows, by way of example, in a side view, a fastening device according to an embodiment of the invention,
- Fig. 3c: shows, by way of example, in a side view, a fastening device according to an embodiment of the invention,
- Fig. 4a: shows, by way of example, in a three dimensional view, a fastening device according to an embodiment of the invention,
- Fig. 4b: shows, by way of example, in a top view, a fastening device according to an embodiment of the invention,
- Fig. 4c: shows, by way of example, in a side view, a fastening device according to an embodiment of the invention,
- Fig. 4d: shows, by way of example, in a side view, a fastening device according to an embodiment of the invention.
- Fig. 5a: shows, by way of example, in a three dimensional view, a fastening device according to an embodiment of the invention,
- Fig. 5b: shows, by way of example, in a top view, a fastening device according to an embodiment of the invention,
- Fig. 5c: shows, by way of example, in a side view, a fastening device according to an embodiment of the invention,
- Fig. 6a: shows, by way of example, in a three dimensional view, a first polymer containing product,
- Fig. 6b: shows, by way of example, in a three dimensional view, a first polymer containing product,
- Fig. 6c: shows, by way of example, in a side view, a first polymer containing product,
- Fig. 6d: shows, by way of example, in a side view, a protrusion of a first polymer containing product,
- Fig. 6e: shows, by way of example, in a side view, a protrusion of a first polymer containing product,
- Fig. 7a: shows, by way of example, in a top view, a combination comprising a fastening device mounted on a protrusion of a first polymer containing product,
- Fig. 7b: shows, by way of example, in a three dimensional view, a combination according to an embodiment of the invention comprising two fastening devices mounted on protrusions of a first polymer containing product, the protrusions configured to be pushed into a hollow section of a second polymer containing product,
- Fig. 7c: shows, by way of example, in a three dimensional view, forming of a combination according to an embodiment of the invention comprising two second polymer containing products, fastening devices mounted on protrusions of a first polymer containing product, the protrusions configured to be pushed into the hollow sections of the second polymer containing products,
- Fig. 7d: shows, by way of example, in a top view, forming of a combination according to an embodiment of the invention comprising a second polymer containing products, fastening device mounted on a protrusion of a first polymer containing product,
- Fig. 7e: shows, by way of example, from inside the second polymer containing product, a combination comprising an interlocking push-in coupling and a second pair of flexible joints configured to press the second pair of blade elements against the second polymer containing product to form a second self-tightening joint according to an embodiment of the invention,
- Fig. 7f: shows, by way of example, in a side view, a fastening device mounted on the protrusion of a first polymer containing product, and a first pair of flexible joints configured to press the first pair of blade elements against the first polymer containing product to form a first self-tightening joint according to an embodiment of the invention,
- Fig. 8: shows, by way of example, in a two-dimensional view, a second polymer containing product having hollow sections,
- Fig. 9a: shows, by way of example, in a two-dimensional view, a first polymer containing product having protrusions,
- Fig. 9b: shows, by way of example, in a two-dimensional view, a first polymer containing product having protrusions,
- Fig. 10a: shows, by way of example, in a three-dimensional view, a first polymer containing product having protrusions,
- Fig. 10b: shows, by way of example, in a three-dimensional view, a fastening device mounted on the protrusion of a first polymer containing product,
- Fig. 10c: shows, by way of example, in a side view, a first polymer containing product having protrusions,
- Fig. 11a: shows, by way of example, in a three-dimensional view, a first polymer containing product having protrusions suitable to be used for forming an interlocking push-in coupling between a number of second polymer containing products having hollow sections,
- Fig. 11b: shows, by way of example, in a side view, a first polymer containing product having protrusions suitable to be used for forming an interlocking push-in coupling between a number of second polymer containing products having hollow sections,
- Fig. 12a: shows, by way of example, in a side view, a first polymer containing product having protrusions suitable to be used for forming an interlocking push-in coupling between a number of second polymer containing products having hollow sections such that that the heights of the second polymer containing products are parallel to one another
- Fig. 12b: shows, by way of example, a three-dimensional view of the first polymer containing product of Fig 12a, wherein the first polymer containing product has a body comprising a hollow section,
- Fig. 12c: shows, by way of example, a three-dimensional view of the first polymer containing product of Fig 12a wherein the first polymer containing product has a solid body.

In the figures, reference signs SX, SY and SZ denote directions orthogonal to each other.

### DETAILED DESCRIPTION

In the description, the term 'push-in coupling' is used to denote a way of connecting two polymer containing products, wherein one of the polymer containing products having a protrusion is pushed into a hollow section of the other polymer containing products. A polymer containing product having a protrusion is denoted as a first polymer containing product. A polymer containing product having a hollow section is denoted as a second polymer containing product. A separate fastening device may be used to hold the first and second polymer containing products together in the push-in coupling. Preferably, the fastening device may form self-tightening joints which hold the products together. Typically, a polymer containing product having a protrusion may be a mold casted product. Mould casting enables a cost efficient production of parts with repeatable tolerance in dimensions of the protrusions, such that they may be retrofitted to the hollow sections of another polymer containing product. Typically, a polymer containing product having a hollow section may be a product formed by extrusion process. The extrusion process provides a cost-efficient way of producing bulk products having hollow sections. A mould cast polymer containing product may comprise, for example thermoplastic polymer, such as polyethylene, polypropylene or polyvinylchloride (PVC). These types of polymers are easily available in various purity grades, and may be modified to serve different end user applications. A mould cast polymer containing product may consist essentially of polymer, such as any of the above-mentioned polymers. A polymer containing product manufactured by mould casting may be a composite product comprising organic natural fiber material. Polymers suitable to be used for a composite product comprising organic natural fiber material may be categorized into two groups based on the chemical compatibility with organic natural fiber material. A first group comprises polymers having similar polarity with organic natural fiber material, whereas the second group comprises polymers having adverse polarity with organic natural fiber material. Organic natural fiber material typically comprises or consists to a high extent of cellulose molecules. Cellulose molecules contain high amount of polar hydroxyl groups. The polarity of the hydroxyl groups allows the cellulose molecules to interact with adjacent molecules. The polarity of the hydroxyl groups also allows the cellulose molecules to interact with other adjacent molecules, for example polymers. Organic natural fiber material comprising cellulose therefore typically has highly polar groups, and high surface energy level.

Manufacturing of polymer composites containing cellulose molecules is easier with polymers belonging to the first group of polymers having polarity. Such polymers are, for example polyamide (PA), polyvinylchloride (PVC), polystyrene (PS), polycarbonate (PC) and acrylonitrile butadiene styrene (ABS), which is a terpolymer made by polymerizing styrene and acrylonitrile in the presence of polybutadiene. Such polymers typically have functional groups available for reacting with the hydroxyl groups, for example through hydrogen bonding. However, many of such polymers are not easily recyclable.

Polymers belonging to the second group comprise polymers having non-polar behavior or low surface energy level. Such polymers are, for example, polyolefins, which are typically non-polar, and have low surface energy level. The incompatibility of surface energy levels between hydrophilic cellulose and non-polar polyolefin makes the manufacturing of composite product of such materials more difficult. However, as an advantage, polyolefins are in general highly recyclable materials, and thus preferred in manufacturing of environmentally sustainable composite products. By using modified polyolefins, for example maleic anhydride grafted polyolefins, the compatibility of such polymers towards organic natural fiber material comprising cellulose may be improved.

A polymer containing product, which is an extrusion product, may comprise thermoplastic polymer, such as polyethylene or polypropylene. A polymer containing product, which is an extrusion product, may be a composite product comprising organic natural fiber material. When connecting two polymer containing products by an interlocking push-in coupling, the composition of the first polymer containing product having a protrusion and the composition of the second polymer containing product having a hollow section may be different, such that one is made of a composite product comprising organic natural fiber material. Alternatively, the composition of the first polymer containing product having a protrusion and the composition of the second polymer containing product having a hollow section may be the same.

In the description, a 'fastening device' or a 'fastener' refers to a component, which may be used to mechanically attach or connect two separate products together. The fastening device is an item comprising a body with dimensions. The fastening device may be formed of a single piece of material by appropriate methods, such as cutting and bending, for example. The fastening device may be composed of two or more parts, which may be configured such that when fitted together by pressing together, the parts form the fastening device. The fastening device comprises a base plate having a first surface and a second surface and two pairs of blade element connected to the base plate by flexible joints. The two pairs of blade element may be denoted as a first pair of blade elements and a second pair of blade elements. The blade elements comprise edges. The blade elements are connected to the base plate by flexible joints, which are configured to act as springs enabling the blade elements to bend and return to their original shape. The first pair of blade elements is connected to the base plate by a first pair of flexible joints. The second pair of blade elements is connected to the base plate by a second pair of flexible joints. The first pair and second pair of flexible joints may be formed by bending the blade elements to have a connection angle with respect to the base plate. The base plate comprises a shape with sides. The base plate may comprise a first pair of outer sides and a second pair of outer sides. The first pair of outer sides may be substantially perpendicular to the second pair of outer sides. The base plate may comprise a first pair of opposite sides and a second pair of opposite sides. The first pair of opposite sides may be the outer sides of the base plate such that the outer sides of the base plate form the connection points of the first pair of flexible joints. By connection points it is meant, that the blade elements have been attached along the sides to the base plate, such that they extend from the base plate in a curved or angular manner. The second pair of opposite sides may be the outer sides of the base plate such that the outer sides of the base plate form the connection points of the second pair of flexible joints. The base pate may comprise bracing elements for stiffening the profile of the base plate. The fastening device may comprise a through-hole arranged on the base plate. The through-hole may be used for mounting the fastening device on the first polymer containing product. The through-hole may be used for fixing the fastening device on the first polymer containing product. The through-hole may be configured to orient the fastening device in relation to the first polymer containing product. The fastening device comprises an insertion direction substantially parallel with the normal of the first surface of the base plate configured to orient the second pair of blade elements, such that when pushed into the second polymer containing product, the second pair of flexible joints enter the hollow section before the edges of the second pair of blade elements. The fastening device may be configured to have reflection symmetry, such that a plane of symmetry parallel to the normal of the first or second surface of the base plate divides the fastening device into two pieces which are mirror images of each other.

The fastening device may be formed of a resilient material. A fastening device of resilient material has a modulus or resilience such that the first pair of flexible joints act as springs configured to resist the release of the fastening device from the first polymer containing product and the second pair of flexible joints act as springs configured to resist the release of the fastening device from the second polymer containing product. Resilience in this context refers to the ability of the material in the fastening device to absorb energy when it is deformed elastically, and release that energy upon unloading. Resilience of a material can be measured in a unit of joule per cubic meters (J/m³) by calculating area underneath a stress-strain (σ-ε) curve of a material, which gives a resilience value. The modulus of resilience refers to the maximum energy that the material can absorb per unit volume without creating a permanent distortion. The modulus of resilience can be measured by integrating the stress-strain curve from zero to the elastic limit of the material. When made of resilient material, the fastening device can be arranged to comprise angles or curves denoted as flexible joints, which act as springs. When in use, the flexible joints can press the blade elements of the fastening device against the first or second polymer containing product. The resilience of a material prevents the mechanical relaxation. The resilience of a material further may be used to obtain shapes acting as force producing elements, such as springs. The fastening device may be made of material having a modulus or resilience for example in the range of 30 to 4500 kJ/m³. In particular, hard metals, such as steel or steel alloys, may have such modulus or resilience. Preferably, the fastening device may be formed of spring steel. Spring steel refers to a low-alloy, medium-carbon steel or high-carbon steel with high yield strength. A base plate, flexible joints and blade elements made of spring steel have an ability to return to their original shape despite significant bending or twisting. Spring steel may have a modulus or resilience equal to or higher than 300 kJ/m³.

The fastening device may be formed of a material having indentation hardness. Indentation hardness may be measured for metallic materials according to ISO 6508-1 standard (Rockwell hardness test) and for plastic materials according to ISO 2039-2 standard. For the fastening device to form the first self-tightening joint against the first polymer containing product, the material of the fastening device may be selected to have a hardness value higher than the hardness of the first polymer containing product. For the fastening device to form the second self-tightening joint against the second polymer containing product, the material of the fastening device may be selected to have a hardness value higher than the hardness of the second polymer containing product. When the fastening device is formed of a material having a hardness higher than the hardness of either of the polymer containing products, the edges of the first and the second blade elements can bite into the first and second polymer containing products, which improves the interlocking effect of the fastening device in a push-in coupling. Particularly suitable materials in regard of both resilience and hardness are hard metals, such as steel or steel alloys. Preferably, the fastening device may be formed of spring steel.

A fastening device formed of spring steel is particularly advantageous when used for coupling polymer containing material having relatively high indentation hardness or high absorbance of water, such as polyamides, polystyrene, polycarbonate or acrylonitrile butadiene styrene. Due to the high resilience and hardness of the spring steel, the fastening device may be configured to provide a sufficient press force to withstand changes in product dimensions caused by changes in temperature and/or relative humidity level. The changes in temperature may occur in a wide range, such as in a range of -30°C to +100°C. The relative humidity level may vary between 0% and 100%.

A blade element may be connected to the base plate of a fastening device at angle α or at angle β, wherein the angle α is used to denote angles of the first pair of blade elements and angle β is used to denote angles of the second pair of blade elements. The angle α or angle β defines the connection angle of a blade element to the base plate. When the fastening device is mounted on a protrusion of a first polymer containing product, the angle α also defines the contact angle of the edge of a blade element with the surface of the protrusion. When the fastening device is pushed into a hollow section of a second polymer containing product, the angle β also defines the contact angle of the edge of a blade element with the interior surface of the second polymer containing product in the hollow section. When the resilience of the material is known, the angle α may be used to control the press force produced by the first pair of flexible joints in combination with the first pair of blade elements to the protrusion of the first polymer containing product. The angle α may be further be used to control the amount of embedding of the first pair of blade elements into the protrusion of the first polymer containing product. In similar manner, when the resilience of the material is known, the angle β may be used to control the press force produced by the second pair of flexible joints in combination with the second pair of blade elements to the interior surface of the second polymer containing product in the hollow section. The angle β may be further be used to control the amount of embedding of the second pair of blade elements into the interior surface of the second polymer containing product in the hollow section.

The angle α is the connection angle between the normal of the first surface of the base plate and a blade element of the first pair of blade elements. When the blade elements of the first pair of blade elements have reflection symmetry towards each other, each blade element of the first pair of blade elements has angle α as the connection angle between the normal of the first surface of the base plate. The angle α is an acute angle, having a value less than 90°. The angle α may be in a range of 5 to 85°, preferably in a range of 10 to 80° or in the range of 15 to 75°, most preferably in a range of 30 to 60°. When the angle α is less than 45°, the mounting of the first pair of blade elements to the protrusion of the first polymer containing product is easy, as the blade elements are arranged more parallel to the insertion direction of the fastening device. When the angle α is higher than 45°, the mounting of the first pair of blade elements to the protrusion of the first polymer containing product is more difficult, as the blade elements are arranged less parallel to the insertion direction of the fastening device. The angle α may be selected depending of the hardness of the blade element material and the hardness of the surface of the first polymer containing product. When the angle α is higher than 45°, the contact angle of the edge of a blade element with the surface of the protrusion of the first polymer containing product may provide a better holding effect, such that the edge of the blade element embeds itself deeper into the surface of the protrusion. An optimal angle for the angle α is typically 45° or close to 45°, such as in the range of 40 to 50°, which provides a good balance for the mounting of the fastening device to the protrusion of the first polymer containing product and a sufficient press force of the first pair of blade elements against the protrusion of the first polymer containing product.

When the angle α is less than 45°, the balance between the ease of mounting of the fastening device to the protrusion of the first polymer containing product and a sufficient press force of the first pair of blade elements against the protrusion of the first polymer containing product may be shifted by changing the width and/or length of the first pair of blade elements. For example, the press force of the first pair of blade elements against the protrusion of the first polymer containing product may be increased by shortening the length that the blade elements extend from the base plate at an angle α. Thus the connection angle α between the normal of the first surface of the base plate and a blade element of the first pair of blade elements may be in the range of 10 to 20°, while providing a sufficient holding effect for the fastening device.

The holding effect of the fastening device against the protrusion of the first polymer containing product may further be increased by performing the mounting of the fastening device to the protrusion of the first polymer containing product at a factory. A mechanized assembly using automated device for the mounting of the fastening device to the protrusion of the first polymer containing product can be used to control the tightness of the first self-tightening joint. A mechanized assembly using automated device for the mounting of the fastening device can provide a tighter fit, such that the first pair of flexible joints in combination with the first pair of blade elements produce a higher press force against the protrusion of the first polymer containing product than by manual mounting of the fastening device.

The angle β is the connection angle between the normal of the second surface of the base plate and a blade element of the second pair of blade elements. When the blade elements of the second pair of blade elements have reflection symmetry towards each other, each blade element of the second pair of blade elements has angle β as the connection angle between the normal of the second surface of the base plate. The angle β is an acute angle, having a value less than 90°. The angle β may be in a range of 5 to 85°, preferably in a range of 10 to 80° or in the range of 15 to 75°, most preferably in a range of 30 to 60°. When the angle β is less than 45°, the pushing of the second pair of blade elements to the hollow section of the second polymer containing product is easy, as the blade elements are arranged more parallel to the insertion direction of the fastening device. When the angle β is higher than 45°, the mounting of the second pair of blade elements to the hollow section of the second polymer containing product is more difficult, as the blade elements are arranged less parallel to the insertion direction of the fastening device. The angle β may be selected depending of the hardness of the blade element material and the hardness of the inner surface of the second polymer containing product. When the angle β is higher than 45°, the contact angle of the edge of a blade element with the inner surface of the second polymer containing product may provide a better holding effect, such that the edge of the blade element embeds itself deeper into the surface. An optimal angle for the angle β is typically 45° or close to 45°, such as in the range of 40 to 50°, which provides a good balance for pushing the fastening device into the hollow section of the second polymer containing product and a sufficient press force of the second pair of blade elements against the walls of the hollow section of the second polymer containing product.

The angles α and/or angle β may thus be selected such that the fastening device forms a non-releasable push-in coupling, wherein the fastening device interlocks the polymer containing products in a permanent manner. The fastening device may therefore be a single-use product, which is designed to be used only once.

The first pair of blade elements facing each other on a first pair of opposite sides of the base plate may be arranged substantially perpendicular to the second pair of blade elements facing each other on a first pair of opposite sides of the base plate. This configuration of blade elements on a base plate provides a fastening device capable to form a first self-tightening joint by a first pair of blade elements pressing the first polymer containing product from first pair of opposite sides and a second self-tightening joint by a second pair of blade elements pressing the second polymer containing product from a second pair of opposite sides, wherein the first pair of opposite sides is perpendicular to the second pair of opposite sides. The perpendicular arrangement of the self-tightening joints improves the interlocking of the polymer containing products. In this configuration, the press forces produced by the flexible joints connecting the blade elements to the base plate have been configured to push against each other in each pair of blade elements. In this configuration, furthermore, the perpendicular arrangement of the first pair of opposite sides perpendicular to the second pair of opposite sides provides press forces in substantially perpendicular directions between the first and the second pair of blade elements. The perpendicular press forces improve the hold of the edges of the blade elements in the self-tightening joints.

A fastening device suitable to be used for forming an interlocking push-in coupling between a first polymer containing product having a protrusion and a second polymer containing product having a hollow section may comprise:
- a base plate having a first pair of opposite sides, a second pair of opposite sides, a first surface and a second surface;
- a first pair of blade elements extending from sides of the first pair of the opposite sides;
- a second pair of blade elements extending from sides of the second pair of the opposite sides; wherein
- the first pair of blade elements is connected to the base plate by a first pair of flexible joints forming a first acute angle α between the normal of the first surface;
- the second pair of blade elements is connected to the base plate by a second pair of flexible joints forming a second acute angle β between the normal of the second surface; and
- when mounted on the protrusion of the first polymer containing product, the first pair of flexible joints is configured to press the first pair of blade elements against the first polymer containing product to form a first self-tightening joint; and
- when pushed into the hollow section of the second polymer containing product, the second pair of flexible joints is configured to press the second pair of blade elements against the second polymer containing product to form a second self-tightening joint.

A not claimed method for forming an interlocking push-in coupling between a first polymer containing product having a protrusion and a second polymer containing product (PROD2) having a hollow section by means of a fastening device may comprise
- providing a fastening device as described above, the fastening device comprising
   ∘ a base plate having a first pair of opposite sides, a second pair of opposite sides, a first surface and a second surface;
   ∘ a first pair of blade elements extending from sides of the first pair of the opposite sides;
   ∘ a second pair of blade elements extending from sides of the second pair of the opposite sides; wherein
   ∘ the first pair of blade elements is connected to the base plate by a first pair of flexible joints forming a first acute angle α between the normal of the first surface; and
   ∘ the second pair of blade elements is connected to the base plate by a second pair of flexible joints forming a second acute angle β between the normal of the second surface;
- mounting the fastening device on the protrusion of the first polymer containing product such that the first pair of flexible joints is configured to press the first pair of blade elements against the first polymer containing product to form a first self-tightening joint; and
- then pushing the protrusion of the first polymer containing product comprising the fastening device into the hollow section of the second polymer containing product, such that the second pair of flexible joints is configured to press the second pair of blade elements against the second polymer containing product to form a second self-tightening joint.

A not claimed polymer containing product may have a body with at least one substantially planar side, the planar side comprising at least one protrusion extending substantially parallel to the normal of the surface from the planar side towards a tip of the protrusion, wherein the protrusion comprises one or more supporting elements between the tip of the protrusion and the planar side, wherein the supporting elements have been configured to act as stoppers for orienting a fastening device as described above, such that when the fastening device is mounted on the protrusion, the fastening device forms a first self-tightening joint with the protrusion and is oriented in an insertion direction substantially parallel with the normal of the body surface.

A polymer containing product suitable to be used for forming an interlocking push-in coupling between two second polymer containing products having a hollow section, may comprise a body consisting substantially of:
- a pair of self-similar protrusions ending at a tip,
- the pair of self-similar protrusions joined together at middle,
- the protrusions configured to extend from the middle in opposite directions along a longitudinal axis such that the protrusions are concentric to each other along the longitudinal axis,
- each protrusion comprising one or more supporting elements between the tip of the protrusion and the middle of the body, and
- wherein the supporting elements have been configured to act as a counterpart for positioning a fastening device such that when the fastening device is mounted on the protrusion, the fastening device forms a first self-tightening joint with the protrusion, and is oriented in an insertion direction (DIR_{IN}) substantially parallel to the longitudinal axis.

The supporting element may be, for example, a base or a shoulder.

A combination suitable to be used for forming an interlocking push-in coupling may comprise a fastening device as described above, and a polymer containing product having one or more protrusions as described above. The combination may further comprise a second polymer containing product having a hollow section.

In the following examples, several variations will be described in more detail with reference to the appended drawings.

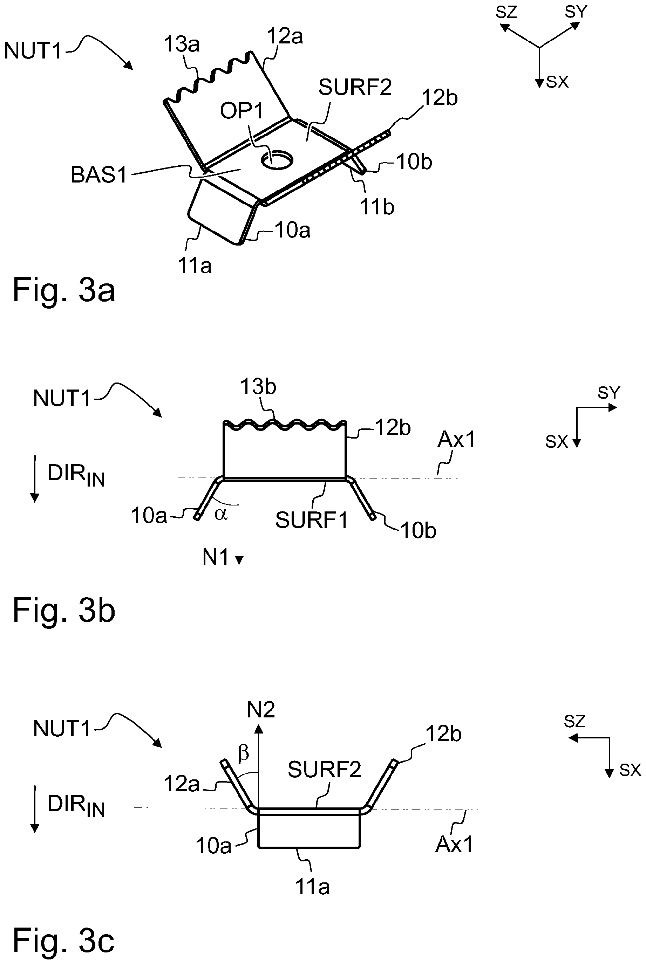

Figures 3a, 3b and 3c show, by way of example, a fastening device according to an embodiment of the invention.

Figures 3a to 3c show a fastening device NUT1 suitable to be used for forming an interlocking push-in coupling between a first polymer containing product PROD1, PROD11, PROD12 having a protrusion APP1 and a second polymer containing product PROD2 having a hollow section GAP1. The fastening device NUT1 comprises a base plate BAS1. The base plate BAS1 may have a substantially rectangular shape, such that the base plate comprises a first pair of outer sides and a second pair of outer sides, wherein the first pair of outer sides is substantially perpendicular to the second pair of outer sides. The base plate BAS1 may be substantially planar. The base plate BAS1 comprises a first surface SURF1 and a second surface SURF2. A first pair of blade elements 10a, 10b, extends from a first pair of opposite sides of the base plate BAS1. The first pair of opposite sides are the outer sides of the base plate BAS1. A second pair of blade elements 12a, 12b, extends from a second pair of opposite sides of the base plate BAS1. The second pair of opposite sides are also the outer sides of the base plate BAS1. The first pair of blade elements 10a, 10b, are connected to the base plate by a first pair of flexible joints forming a first acute angle α between the normal N1 of the first surface SURF1. The second pair of blade elements are connected to the base plate by a second pair of flexible joints forming a second acute angle β between the normal N2 of the second surface SURF2. The first pair of blade elements comprise edges 11a, 11b, which edges when mounted on the first polymer containing product PROD1, PROD11, PROD12 are configured to press against the first polymer containing product. The second pair of blade elements comprise edges 13a, 13b, which edges when mounted on the second polymer containing product PROD2 are configured to press against the second polymer containing product. The fastening device may comprise a through-hole OP1, arranged on the base plate BAS1. The trough-hole OP1 is optional. The through-hole OP1 may be used, for example, in fixing the fastening device NUT1 to the first polymer containing product PROD1, PROD11, PROD12. When a strong fixing is required, the trough-hole OP1 may be used for attaching the fastening device NUT1 with a screw. The fastening device has an insertion direction DIR_{IN} substantially parallel with the normal N1 of the first surface SURF1 configured to orient the second pair of blade elements, such that when pushed into the second polymer containing product PROD2 in direction SX, the second pair of flexible joints enter the hollow section GAP1 before the edges 13a, 13b of the second pair of blade elements. An axis Ax1 may be drawn along the first surface SURF1 or the second surface SURF2. The axis, when in the middle of the base plate BAS1, can be used to show a plane of symmetry parallel to the normal N1, N2 of the first or second surface SURF1, SURF2 of the base plate BAS1, which divides the fastening device NUT1 into two pieces which are mirror images of each other.

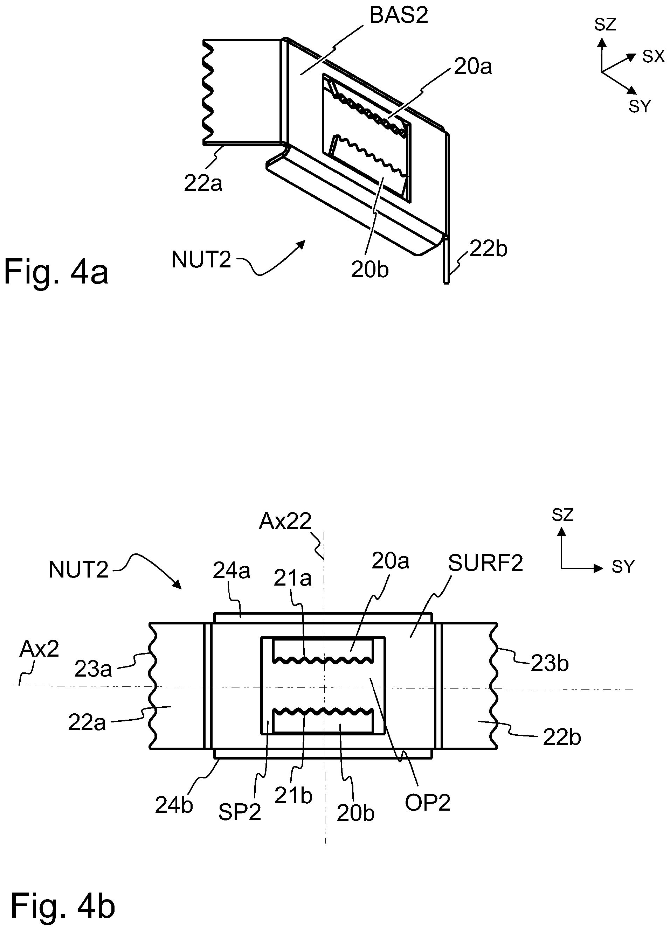

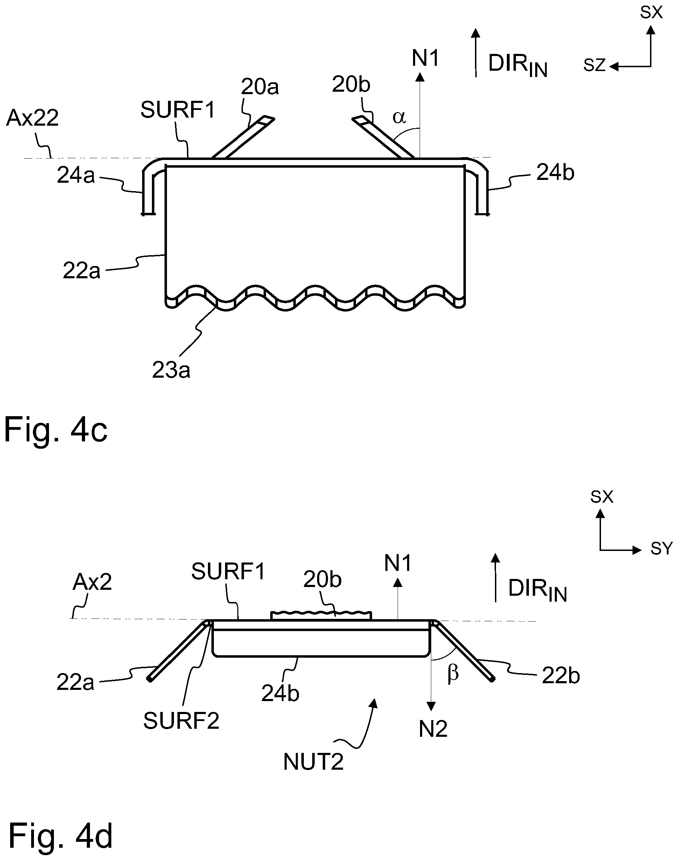

Figures 4a, 4b, 4c and 4d show, by way of example, a fastening device according to a second embodiment of the invention.

Figures 4a to 4d show a fastening device NUT2 suitable to be used for forming an interlocking push-in coupling between a first polymer containing product PROD1, PROD11, PROD12 having a protrusion APP2 and a second polymer containing product PROD2 having a hollow section GAP1. The fastening device NUT2 comprises a base plate BAS2. The base plate BAS2 may have a substantially rectangular shape, such that the base plate comprises a first pair of outer sides and a second pair of outer sides, wherein the first pair of outer sides is substantially perpendicular to the second pair of outer sides. The base plate BAS2 comprises a first pair of inner sides and a second pair of inner sides, wherein the first pair of inner sides is substantially perpendicular to the second pair of inner sides. The inner sides of the base plate BAS2 are arranged to line a through-hole OP2 arranged on the base plate BAS2. The trough-hole OP2 has a substantially rectangular shape. The through-hole OP2 is suitable for allowing a protrusion APP2 of the first polymer containing product PROD1, PROD11, PROD12 to pass through such that the fastening device NUT2 may be mounted on the first polymer containing product PROD1, PROD11, PROD12. The base plate BAS2 may be substantially planar. The base plate BAS2 comprises a first surface SURF1 and a second surface SURF2. A first pair of blade elements 20a, 20b, extends from a first pair of opposite sides of the base plate BAS2. The first pair of opposite sides are inner sides of the base plate BAS2. A second pair of blade elements 22a, 22b, extends from a second pair of opposite sides of the base plate BAS2. The second pair of opposite sides are outer sides of the base plate BAS2. The first pair of opposite sides is substantially perpendicular to the second pair of opposite sides. A pair of bracing elements 24a, 24b may extend from a second pair of outer sides of the base plate BAS2, which second pair of outer sides are perpendicular to the outer sides comprising the second pair of blade elements 22a, 22b. The bracing elements 24a, 24b may be connected to the base plate at a substantially perpendicular angle, such that the bracing elements 24a, 24b extend substantially parallel to the normal N2 of the second surface SURF2. The bracing elements 24a, 24b may be used for stiffening the profile of the base plate BAS2. The first pair of blade elements 20a, 20b, are connected to the base plate by a first pair of flexible joints forming a first acute angle α between the normal N1 of the first surface SURF1. The first pair of blade elements 20a, 20b, may be connected to the base plate such that a gap SP2 is left on both sides of the connection point serving as a flexible joint of the first pair of flexible joints. The gaps SP2 may be used to provide maneuverability along a longitudinal axis Ax2 such that when mounting the fastening device NUT2 on the first polymer containing product PROD1, PROD11, PROD12 the fastening device NUT2 is easier to position on the protrusion APP2 of the first polymer containing product PROD1, PROD11, PROD12. The second pair of blade elements are connected to the base plate by a second pair of flexible joints forming a second acute angle β between the normal N2 of the second surface SURF2. The first pair of blade elements comprise edges 21a, 21b, which edges when mounted on the first polymer containing product PROD1, PROD11, PROD12 are configured to press against the first polymer containing product. The second pair of blade elements comprise edges 23a, 23b, which edges when mounted on the second polymer containing product PROD2 are configured to press against the second polymer containing product. The edges 21a, 21b and/or 23a, 23b, may be teethed. A zig-zag profile may be used to improve the embedding of the edges, when pressed against the surface of the polymer containing product. The fastening device NUT2 has an insertion direction DIR_{IN} substantially parallel with the normal N1 of the first surface SURF1 configured to orient the second pair of blade elements, such that when pushed into the second polymer containing product PROD2 in direction SX, the second pair of flexible joints enter the hollow section GAP1 before the edges 23a, 23b of the second pair of blade elements. An axis Ax2, Ax22 may be drawn along the first surface SURF1 or the second surface SURF2. The axis Ax2, Ax22, when in the middle of the base plate BAS2, can be used to show a plane of symmetry parallel to the normal N1, N2 of the first or second surface SURF1, SURF2 of the base plate BAS2, which divides the fastening device NUT2 into two pieces which are mirror images of each other.

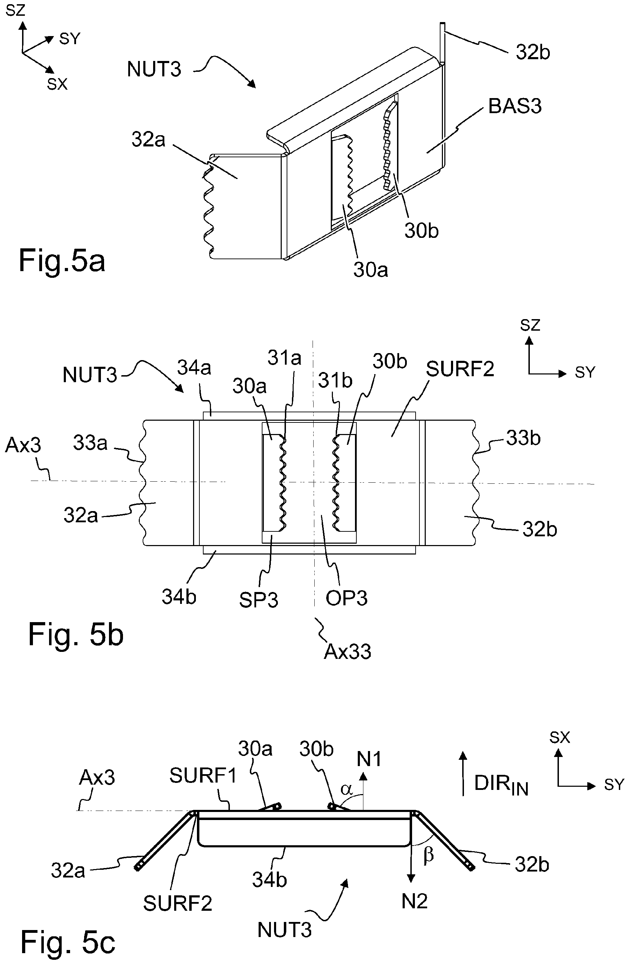

Figures 5a, 5b, and 5c show, by way of example, a fastening device according to a third embodiment of the invention.

Figures 5a to 5c show a fastening device NUT3 suitable to be used for forming an interlocking push-in coupling between a first polymer containing product PROD1, PROD11, PROD12 having a protrusion APP2 and a second polymer containing product PROD2 having a hollow section GAP1. The fastening device NUT3 comprises a base plate BAS3. The base plate BAS3 may have a substantially rectangular shape, such that the base plate comprises a first pair of outer sides and a second pair of outer sides, wherein the first pair of outer sides is substantially perpendicular to the second pair of outer sides. The base plate BAS3 comprises a first pair of inner sides and a second pair of inner sides, wherein the first pair of inner sides is substantially perpendicular to the second pair of inner sides. The inner sides of the base plate BAS3 are arranged to line a through-hole OP3 arranged on the base plate BAS3. The trough-hole OP3 has a substantially rectangular shape. The through-hole OP3 is suitable for allowing a protrusion APP2 of the first polymer containing product PROD1, PROD11, PROD12 to pass through such that the fastening device NUT3 may be mounted on the first polymer containing product PROD1, PROD11, PROD12. The base plate BAS3 may be substantially planar. The base plate BAS3 comprises a first surface SURF1 and a second surface SURF2. A first pair of blade elements 30a, 30b, extends from a first pair of opposite sides of the base plate BAS3. The first pair of opposite sides are inner sides of the base plate BAS3. A second pair of blade elements 32a, 32b, extends from a second pair of opposite sides of the base plate BAS3. The second pair of opposite sides are outer sides of the base plate BAS3. The first pair of opposite sides is substantially parallel to the second pair of opposite sides. A pair of bracing elements 34a, 34b may extend from a second pair of outer sides of the base plate BAS3, which second pair of outer sides are perpendicular to the outer sides comprising the second pair of blade elements 32a, 32b. The bracing elements 34a, 34b may be connected to the base plate at a substantially perpendicular angle, such that the bracing elements 34a, 34b extend substantially parallel to the normal N2 of the second surface SURF2. The bracing elements 34a, 34b may be used for stiffening the profile of the base plate BAS3. The first pair of blade elements 30a, 30b, are connected to the base plate by a first pair of flexible joints forming a first acute angle α between the normal N1 of the first surface SURF1. The first pair of blade elements 30a, 30b, may be connected to the base plate such that a gap SP3 is left on both sides of the connection point serving as a flexible joint of the first pair of flexible joints. The gaps SP3 may be used to provide maneuverability along a transversal axis Ax33 such that when mounting the fastening device NUT3 on the first polymer containing product PROD1, PROD11, PROD12 the fastening device NUT3 is easier to position on the protrusion APP2 of the first polymer containing product PROD1, PROD11, PROD12. The second pair of blade elements are connected to the base plate by a second pair of flexible joints forming a second acute angle β between the normal N2 of the second surface SURF2. The first pair of blade elements comprise edges 31a, 31b, which edges when mounted on the first polymer containing product PROD1, PROD11, PROD12 are configured to press against the first polymer containing product. The second pair of blade elements comprise edges 33a, 33b, which edges when mounted on the second polymer containing product PROD2 are configured to press against the second polymer containing product. The edges 31a, 31b and/or 33a, 33b, may be teethed. A zig-zag profile may be used to improve the embedding of the edges, when pressed against the surface of the polymer containing product. The fastening device NUT3 has an insertion direction DIR_{IN} substantially parallel with the normal N1 of the first surface SURF1 configured to orient the second pair of blade elements, such that when pushed into the second polymer containing product PROD2 in direction SX, the second pair of flexible joints enter the hollow section GAP1 before the edges 33a, 33b of the second pair of blade elements. An axis Ax3, Ax33 may be drawn along the first surface SURF1 or the second surface SURF2. The axis Ax3, Ax33, when in the middle of the base plate BAS3, can be used to show a plane of symmetry parallel to the normal N1, N2 of the first or second surface SURF1, SURF2 of the base plate BAS3, which divides the fastening device NUT3 into two pieces which are mirror images of each other.

In all the embodiments, the first pair of blade elements 10a, 10b, 20a, 20b, 30a, 30b and the second pair of blade elements 12a, 12b, 22a, 22b, 32a, 32b are on opposite surfaces of a surface plane parallel to the first surface SURF1 and the second surface SURF2 of the base plate BAS1, BAS2, BAS3 such that the fastening device comprises an interlocking shape suitable to be used for forming an interlocking push-in coupling between a first polymer containing product PROD1 having a protrusion APP1, APP2 and a second polymer containing product PROD2 having a hollow section GAP1. This configuration of the first pair of blade elements 10a, 10b, 20a, 20b, 30a, 30b positioned on an opposite surfaces of a surface plane to the second pair of blade elements 12a, 12b, 22a, 22b, 32a, 32b enables a two-directional assembly of the fastening device in two consecutive steps. The configuration of the first pair of blade elements 10a, 10b, 20a, 20b, 30a, 30b positioned on an opposite surfaces of a surface plane to the second pair of blade elements 12a, 12b, 22a, 22b, 32a, 32b further improves the interlocking nature of the fastening device NUT1, NUT2, NUT3 in the push-in coupling.

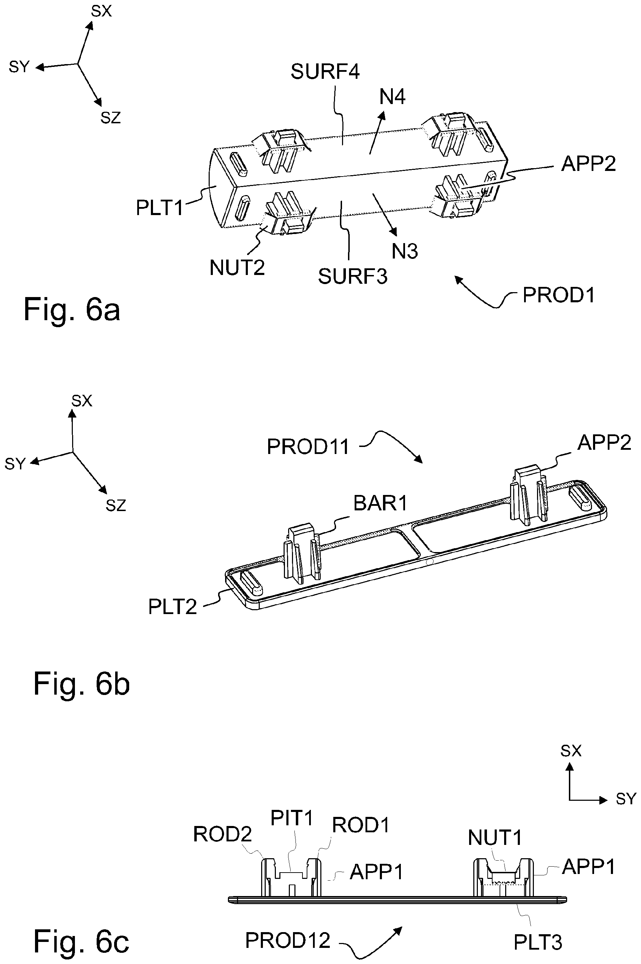

Figures 6a, 6b, and 6c show, by way of examples, variations of a first polymer containing product PROD1, PROD11, PROD12 comprising a protrusion APP1, APP2.

The examples are not to be considered limiting, since the shape and dimensions of the protrusions APP1, APP2 on the polymer containing product PROD1, PROD11, PROD12 may be chosen based on the shape and dimension of the fastening device NUT1, NUT2, NUT3 such that the protrusion APP1, APP2 and the fastening device NUT1, NUT2, NUT3 fit together as counterparts capable to form a self-tightening joint.

Fig. 6a shows, by way of example, in a three dimensional view, a polymer containing product PROD1 comprising one or more protrusions APP2. A polymer containing product PROD1 has a body PLT1. The body PLT1 comprises at least one substantially planar side SURF3. The planar side comprises at least one protrusion APP2 extending substantially parallel to the normal N3 of the surface SURF3. The shape of the protrusion APP2 may be designed such that the protrusion APP2 functions as a counterpart for a fastening device NUT2. When the protrusion APP2 functions as a counterpart for a fastening device NUT2 the fastening device may form a first self-tightening joint with the protrusion APP2 and is oriented in an insertion direction DIR_{IN} substantially parallel with the normal N3 of the body surface SURF1. The polymer containing product PROD1 may comprise a second surface SURF4. The second surface SURF4 may comprise one or more protrusions APP2 extending substantially parallel to the normal N4 of the second surface SURF4 of the body PLT1. The normal N4 of the second surface SURF4 may have an angle between the normal N3 of the first surface SURF3, such that the protrusions APP2 extend outwards of the body PLT1 in more than one direction. The angle between the normal N3 and the normal N4 may be substantially perpendicular. A first polymer containing product PROD1 having two or more surfaces SURF3, SURF4 comprising one or more protrusions APP2 may be used as a connecting part for one or more second polymer containing products PROD2 having a hollow section GAP1.

Fig. 6b shows, by way of example, in a three dimensional view, a first polymer containing product PROD11 having a body PLT2. The body PLT2 may comprise one or more protrusions APP2. The protrusion APP2 comprises one or more supporting elements BAR1, which may be configured to be pressed against the base plate BAS2, BAS3 or bracing elements 24a, 24b 34a, 34b of the fastening device NUT2, NUT3. The supporting element BAR1 may be located between the tip TIP3 of the protrusion APP2 and the planar side SURF3. The supporting element may be a base configured to act as a counterpart for a base plate of the fastening device NUT2. The supporting element may form an edge or a shoulder, which acts as counterpart for positioning the fastening device NUT2 such that when the fastening device NUT2 is mounted on the protrusion APP2, the fastening device NUT2 forms a first self-tightening joint with the protrusion APP2 and is oriented in an insertion direction DIR_{IN} substantially parallel with the normal N3 of the planar side SURF3.

Fig. 6c shows, by way of example, in a side view, a first polymer containing product PROD12 having a body PLT3. The body PLT3 may comprise one or more protrusions APP1. The protrusion APP2 comprises one or more supporting elements PIT1, ROD1, ROD2, which may be configured to be pressed against the base plate BAS1, BAS2, BAS3 or bracing elements 24a, 24b 34a, 34b of the fastening device NUT1, NUT2, NUT3. The supporting element PIT1 may be located between the tip TIP3 of the protrusion APP2 and the planar side SURF3. The supporting element may be a base configured to act as a counterpart for a base plate of the fastening device NUT2. The supporting element may form an edge or a shoulder, which acts as a counterpart for positioning the fastening device NUT2 such that when the fastening device NUT2 is mounted on the protrusion APP2, the fastening device NUT2 forms a first self-tightening joint with the protrusion APP2 and is oriented in an insertion direction DIR_{IN} substantially parallel with the normal N3 of the planar side SURF3.

The product PROD1, PROD11, PROD12 may be used for example as an end cap for a second polymer containing product PROD2, to cover one or more hollow sections GAP1. Alternatively, the product PROD1, PROD11, PROD12 may be used as a connecting part for two or more second polymer containing products PROD2 having a hollow section GAP1. When the second polymer containing product PROD2 comprises a hollow section, such as a groove on a side along the length of the product, the product PROD11, 12 could also be used as a cover strip for the second polymer containing product PROD2 along the length of the second polymer containing product PROD2. When used as a cover strip, the length of the first polymer containing product PROD11, PROD12 may be matched to the length of the groove on the second polymer containing product PROD2.

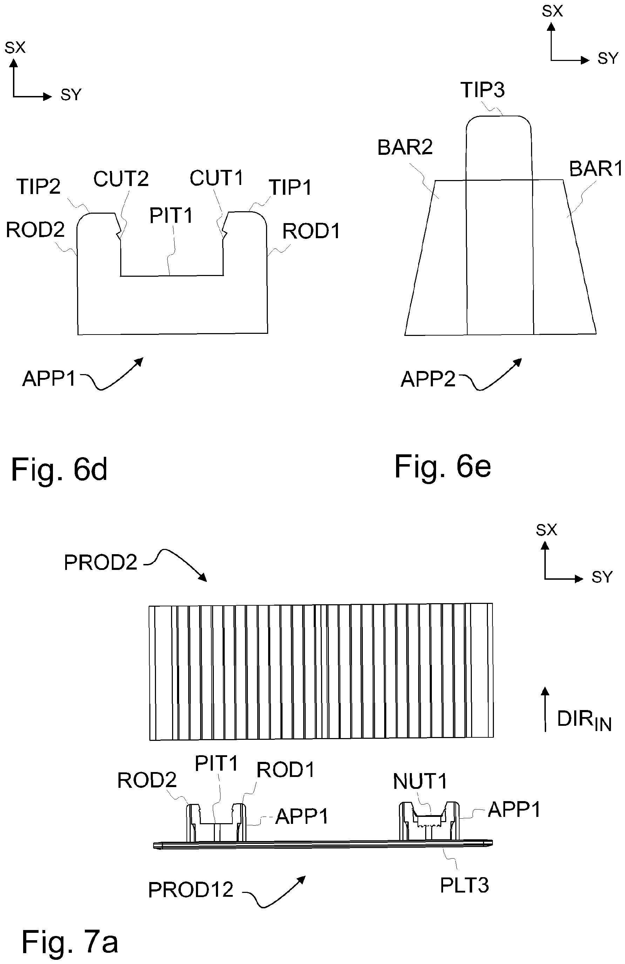

Fig. 6d and 6e show, by way of examples, in a side view, some possible shapes for a protrusion APP1 APP2 of a first polymer containing product PROD1, PROD11, PROD12.

In Fig 6d, the protrusion APP1 comprises a supporting element PIT1. The shape of the supporting element PIT1 is configured to function as a counterpart for the base plate BAS1 of the fastening device NUT1. A pair of vertically extending rods ROD1, ROD2 is arranged on opposite sides of the supporting element PIT1, ending at tips TIP1, TIP2 of the protrusion APP1. A pair of notches CUT1, CUT2 may be arranged on the inner sides of the rods ROD1, ROD2 between the tips TIP1, TIP2 and the supporting element PIT1. The pair of notches CUT1, CUT2 may be configured to act as counterparts for the edges 11a, 11b, of the first pair blade elements 10a, 10b, which edges when mounted on the first polymer containing product PROD1, PROD11, PROD12 are configured to press against the first polymer containing product. The supporting element PIT1 and pair of notches CUT1, CUT2 may be configured to act as stoppers for orienting the fastening device NUT1 such that when the fastening device NUT1 is mounted on the protrusion APP1, the fastening device NUT1 forms a first self-tightening joint with the protrusion APP1 and is oriented in an insertion direction DIR_{IN}.

In Fig 6e, the protrusion APP2 comprises one or more supporting elements BAR1, BAR2. The uppermost part TIP3 of the protrusion APP2 functions as a counterpart for the base plate BAS2, BAS3 of the fastening device NUT1, and is used for mounting the fastening device NUT2, NUT3 through the trough-hole OP2, OP3. The edges 21a, 21b, 31a, 31b, of the first pair blade elements 20a, 20b, 30a, 30b, are configured to press against the first polymer containing product PROD1, PROD11, PROD12, when the fastening device NUT2, NUT3 is mounted on the first polymer containing product. The shape of the supporting element BAR1, BAR2 is configured to function as stoppers for orienting the fastening device NUT2, NUT3 such that when the fastening device NUT2, NUT3 is mounted on the protrusion APP2, the fastening device NUT2, NUT3 forms a first self-tightening joint with the protrusion APP2 and is oriented in an insertion direction DIR_{IN}.

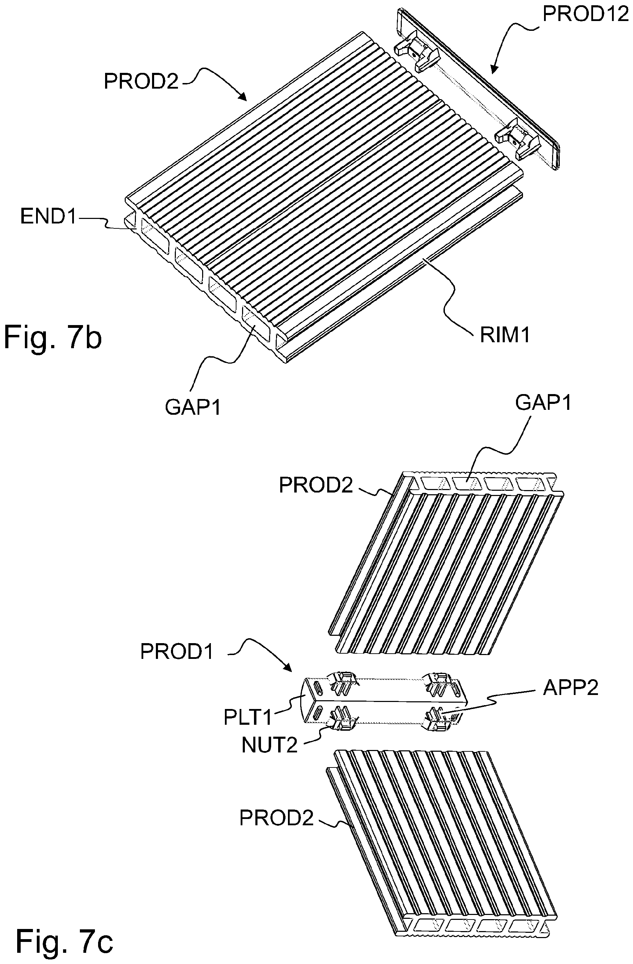

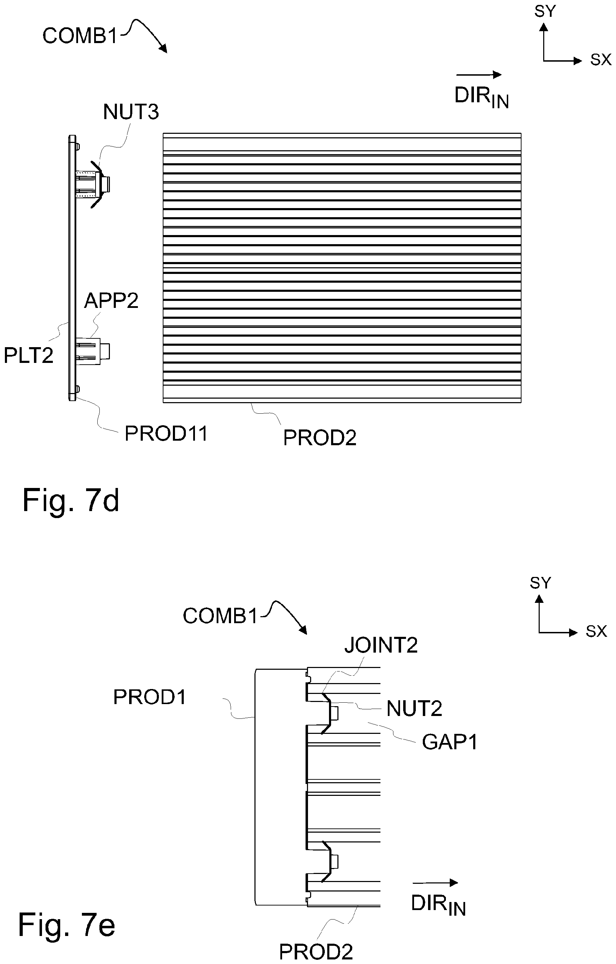

Fig. 7a, 7b, 7c and 7d, show, by way of examples, some combinations comprising a fastening device and a first polymer containing product and/or a second polymer containing product.

As shown by way of examples in Figs. 7a to 7d, a combination COMB1 suitable to be used for forming an interlocking push-in coupling may comprise a fastening device NUT1, NUT2, NUT3 and a first polymer containing product PROD1, PROD11, PROD12. The first polymer containing product PROD1, PROD 11, PROD12 may comprise a body PLT1, PLT2, PLT3 having a first surface SURF3 and a second surface SURF4 and one or more protrusions APP1, APP2 on a first surface of the body SURF3 extending substantially parallel to the normal N3 of the first surface SURF3 of the body PLT1, PLT2, PLT3. The body PLT1, PLT2, PLT3 may be formed of two body parts configured to rotate relative to each other about a longitudinal or transversal axis along the body PLT1, PLT2, PLT3 such that the angle between the two parts is selectable. The two parts of the body PLT1, PLT2, PLT3 may form a hinge allowing the angle between the two parts to be altered. The protrusions APP1, APP2 on the surface SURF3, SURF4 may have been aligned parallel with the longitudinal axis of the body PLT1, PLT2, PLT3 such that the longitudinal axis is along the length of the body PLT1, PLT2, PLT3.

The combination COMB1 may further comprise a second polymer containing product PROD2 having a hollow section GAP1 at the end END1 of the product PROD2. The hollow section GAP1 may be, for example a cavity or a hole extending parallel to the length of the product PROD2 inside the product PROD2 and through the product PROD2 to the other end. The second polymer containing product PROD2 may further have a hollow section RIM1 flanking the product PROD2 along its length on the exterior surface of the product PROD2. The hollow section RIM1 may be, for example a groove.

The fastening device NUT1, NUT2, NUT3 may be mounted on a protrusion APP1, APP2 of the first polymer containing product PROD1, PROD11, PROD12, such that the fastening device NUT1, NUT2, NUT3 forms a first self-tightening joint with the protrusion APP1, APP2 and is oriented in an insertion direction DIR_{IN} substantially parallel with the normal N1 of the base plate surface SURF1 of the fastening device NUT1, NUT2, NUT3. When mounted on a protrusion APP1, APP2 of the first polymer containing product PROD1, PROD11, PROD12 in an insertion direction DIR_{IN}, the fastening device NUT1, NUT2, NUT3 is simultaneously oriented substantially parallel with the normal N3, N4 of the body surface SURF3, SURF4, such that the protrusion APP1, APP2 comprising the fastening device NUT1, NUT2, NUT3 is configured to be pushed into the hollow section GAP1, RIM1 of a second polymer containing product PROD2. As shown by way of example in Figs. 7a to 7d, the combination COMB1 is suitable to be used for connecting two or more polymer containing products together in a push-in coupling. By varying the shape of the first polymer containing product PROD1, PROD11, PROD12, two or more second polymer containing products PROD2 having a hollow section GAP1 at the end END1 of the product PROD2 may be connected in various ways. The products PROD2 may be arranged to continue along the same longitudinal axis, i.e. in a straight line. The products PROD2 may be arranged to continue along the same longitudinal axis, i.e. in a straight line. The products PROD2 may be connected in an angle, for example perpendicular to each other. When using a first polymer containing product PROD1, PROD11, PROD12, having rectangular sides, with protrusions on each side, the products PROD2 may be connected in an crossbar formation, such that four products PROD2 having a hollow section GAP1 at the end END1 of the product are connected together by a single polymer containing product PROD1, PROD11, PROD12.

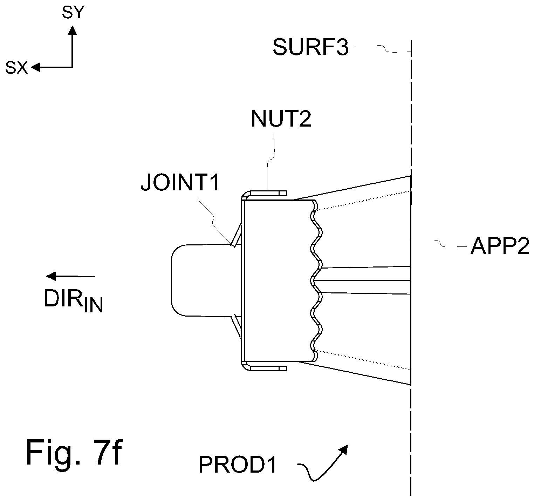

Fig. 7e and 7f show, by way of examples, a first self-tightening joint JOINT1 and a second self-tightening joint JOINT1 in an interlocking push-in coupling between a first polymer containing product PROD1 having a protrusion APP2 and a second polymer containing product PROD2 having a hollow section GAP1 by means of a fastening device NUT2.

Fig. 7f shows, by way of example, a fastening device NUT2 mounted on a protrusion APP2 of the first polymer containing product PROD1 such that the first pair of flexible joints is configured to press the first pair of blade elements 20a, 20b against the protrusion APP2 of the first polymer containing product PROD1 to form a first self-tightening joint JOINT1. When made of resilient material, the first pair of flexible joints act as springs, which hold the protrusion APP2 between the first pair of blade elements 20a, 20b. The press force produced by the flexible joints pins the edges 21a, 21b of the blade elements 20a, 20b against the surface of the protrusion APP2 at a contact angle α. When the hardness of the protrusion APP2 is less than the hardness of the first pair of blade elements 20a, 20b, the edges of the blade elements may be embedded into the protrusion APP2. The configuration of the formed joint JOINT1 resists the release of the fastening device NUT2 from the protrusion APP2, such that the fastening device NUT2 is locked in place and oriented in insertion direction DIR_{IN}. The configuration of the formed joint JOINT1 may further resist the release of the fastening device NUT2 from the protrusion APP2, such that when tried to separate from each other, the embedded edges 21a, 21b of the blade elements 20a, 20b, dig deeper into the protrusion APP2, thus tightening the joint JOINT1.

Fig. 7e shows, by way of example, a combination COMB1 comprising a fastening device NUT2 mounted on a protrusion APP2 of a first polymer containing product PROD1 as described above. The protrusion APP2 of the first polymer containing product PROD1 has been pushed in insertion direction DIR_{IN} into a hollow section GAP1 of a second polymer containing product PROD2 such that the second pair of flexible joints is configured to press the second pair of blade elements 22a, 22b against a pair of opposite walls lining the hollow section GAP1 of the second polymer containing product PROD2 to form a second self-tightening joint JOINT2. When made of resilient material, the second pair of flexible joints act as springs, which press the second pair of blade elements 22a, 22b against the opposite walls lining the hollow section GAP1. The press force produced by the flexible joints pins the edges 23a, 23b of the blade elements 22a, 22b against the opposite walls lining the hollow section GAP1 at a contact angle β. When the hardness of the second polymer containing product PROD2 is less than the hardness of the second pair of blade elements 22a, 22b, the edges of the blade elements may be embedded into the surface of the walls lining the hollow section GAP1. The configuration of the formed joint JOINT2 resists the release of the fastening device NUT2 from the hollow section GAP1, such that the fastening device NUT2 is locked in place and oriented in insertion direction DIR_{IN}. The configuration of the formed joint JOINT2 may further resist the release of the fastening device NUT2 from the hollow section GAP1, such that when tried to separate from each other, the embedded edges 23a, 23b of the blade elements 22a, 22b, dig deeper into the surface of the walls lining the hollow section GAP1, thus tightening the joint JOINT2.

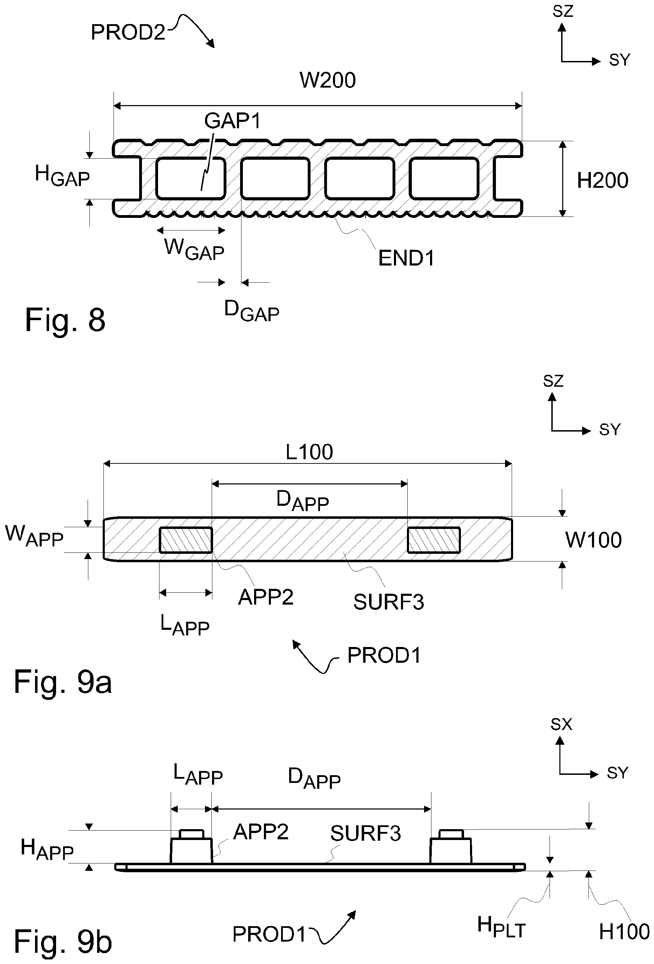

Figs. 8, 9a and 9b show, by way of examples, some dimensions of a second polymer containing product PROD2 having one or more hollow sections and of a first polymer containing product PROD1 having one or more protrusions, which products PROD1, PROD2 are suitable for a push-in coupling as described above.

Fig. 8 shows, by way of example, in a two-dimensional view, dimensions of a second polymer containing product PROD2 having hollow section GAP1. The hollow section GAP1 may have a cross-sectional shape. The cross-sectional shape of the hollow section GAP1 may be substantially rectangular, such that the hollow section GAP1 can be lined by a pair of opposite walls forming the boundary of the hollow section GAP1. The cross-sectional shape of the hollow section GAP1 may deviate from a rectangular shape. The cross-sectional shape of the hollow section GAP1 may comprise curvature. The cross-sectional shape of the hollow section GAP1 may be elliptic, comprising a minor axis and major axis. The hollow section GAP1 may extend through the second polymer containing product. The hollow section GAP1 may be a groove or a depression. The hollow section GAP1 may have a depth substantially parallel to the insertion direction DIR_{IN}. To be suitable for a combination comprising a fastening device NUT1, NUT2, NUT3 and a protrusion APP1, APP2, the depth of the hollow section GAP1 substantially parallel to the insertion direction DIR_{IN} should be equal to or more than the height H_{APP} of the protrusion APP1, APP2. When the cross-sectional shape of the hollow section GAP1 is substantially rectangular, the hollow section GAP1 is lined by a first pair of opposite walls and a second pair of opposite walls forming the boundaries of the hollow section GAP1. The second polymer containing product PROD2 has a cross dimensional width W200 and a cross dimensional height H200, which define the cross dimensional area of the end END1 of the second polymer containing product PROD2. The hollow section GAP1 has a width W_{GAP}. The hollow section GAP1 has a height H_{GAP}. When the cross-sectional shape of the hollow section GAP1 is elliptic, the width W_{GAP} is equal to the major axis and the height H_{GAP} is equal to the minor axis. The end END1 of the second polymer containing product PROD2 may comprise multiple hollow sections GAP1 separated from each other by a distance D_{GAP}, wherein the distance D_{GAP} denotes the minimum distance along the width W200 between two adjacent hollow sections GAP1. The second polymer containing product PROD2 may be configured to have reflection symmetry, such that a plane of symmetry may be drawn which divides the second polymer containing product PROD2 into two halves which are mirror images of each other. The hollow section GAP1 may be configured to have reflection symmetry, such that a plane of symmetry parallel may be drawn which divides the hollow section GAP1 into two halves which are mirror images of each other.

The cross dimensional width W200 of the second polymer containing product PROD2 may vary. Depending of the intended application, the cross dimensional width W200 may be, for example between 1 meter and 2 meters, such as equal to or less than 1500 millimeters. Typically, the cross dimensional width W200 is less than a meter, such as equal to or less than 500 millimeters. Several second polymer containing products PROD2 may be adjoined together such that the products are aligned along the length on the exterior surface of the product PROD2. Therefore, the cross dimensional width W200 of a single second polymer containing product PROD2 may be equal to or less than 400 millimeters, such as in the range of tens of millimeters to hundreds of millimeters, for example in the range of 40 to 400 millimeters, preferably in the range of 45 to 350 millimeters or in the range of 50 to 300 millimeters, most preferably in the range of 120 to 180 millimeters.

The cross dimensional height H200 of the second polymer containing product PROD2 may vary with respect to the width W200. Typically, the cross dimensional height H200 is less than 100 millimeters, such as in the range of 10 to 100 millimeters. The cross dimensional height H200 of a single second polymer containing product PROD2 may be equal to or less than 90 millimeters, such as in the range of tens of millimeters, for example in the range of 15 to 70 millimeters, preferably in the range of 20 to 40 millimeters.

The hollow section GAP1 or the hollow section RIM1 flanking the product PROD2 has a height H_{GAP} and a width W_{GAP}, wherein the H_{GAP} < H200 and W_{GAP} < W200. Two adjacent hollow sections GAP1 may be separated by the distance D_{GAP}, such that D_{GAP} < W200. Depending of the height H200 of the second polymer containing product PROD2, the height H_{GAP} may be in the range of 10 to 70% of the height H200, preferably in the range of 20 to 60 % of the height H200, most preferably equal to or less than 50% of the height H200. Depending of the height H_{GAP}, the width W_{GAP} may be in the range of 40 to 400% of the height H_{GAP}, preferably in the range of 45 to 300 % of the height H200, most preferably in the range of 50 to 200 % of the height H_{GAP}.

The depth of a hollow section GAP1 substantially parallel to the insertion direction DIR_{IN} may be equal to or more than the height H_{APP} of the protrusion APP1, APP2.

Figs. 9a and 9b show, by way of examples, dimensions of a first polymer containing product PROD1 having protrusions. Referring to Figs 6a to 6e, the first polymer containing product PROD1, PROD11, PROD12 may have a body PLT1, PLT2, PLT3 with at least one substantially planar side SURF3, which may comprise at least one protrusion APP1, APP2 extending substantially parallel to the normal of the surface SURF3. The first polymer containing product PROD1, PROD11, PROD12 has a length L100, a width W100 and a height H100. The body PLT1, PLT2, PLT3 may have a height H_{PLT}. The protrusion APP1, APP2 has a length L_{APP}. The protrusion APP1, APP2 has a width W_{APP}. The protrusion APP1, APP2 may comprise one or more supporting elements BAR1, PIT1 below the tip TIP1, TIP2, TIP3 of the protrusion APP1, APP2. The protrusion APP1, APP2 may have a cross-sectional shape. The cross-sectional shape of the protrusion APP1, APP2 may be substantially rectangular. The cross-sectional shape of the protrusion APP1, APP2 may deviate from a rectangular shape. The cross-sectional shape of the hollow section GAP1 may comprise curvature. The cross-sectional shape of the protrusion APP1, APP2 may be elliptic, comprising a minor axis and major axis. The height H_{APP} of the protrusion APP1, APP2 extends substantially parallel to the insertion direction DIR_{IN} from the surface SURF3 to the tip TIP1, TIP2, TIP3. To be suitable for a combination comprising a fastening device NUT1, NUT2, NUT3 and a hollow section GAP1, the height H_{APP} of the protrusion APP1, APP2 substantially parallel to the insertion direction DIR_{IN} should be equal to or less than the depth of the hollow section GAP1 substantially parallel to the insertion direction DIR_{IN}. The surface SURF3 of the first polymer containing product PROD1 has a width and a length, which define the cross dimensional area of the surface SURF3. The width and length of the surface SURF3 may be equal to the length L100 and width W100 of the first polymer containing product. When the cross-sectional shape of the protrusion APP1, APP2 is elliptic, the width W_{APP} is equal to the minor axis and the length L_{APP} is equal to the major axis. The protrusions APP1, APP2 on a surface SURF3 may be aligned with respect to each other. The protrusions APP1, APP2 on a surface SURF3 may be aligned, for example, along the length L100 of the surface SURF3 of the first polymer containing product PROD1. The width W_{APP} of a protrusion APP1, APP2 on a first polymer containing product PROD1 may be selected such that the width W_{APP} is equal to or less than the width W_{GAP} of a hollow section GAP1 on a second polymer containing product PROD2. The length L_{APP} of a protrusion APP1, APP2 on a first polymer containing product PROD1 may be selected such that the length L_{APP} is equal to or less than the height H_{GAP} of a hollow section GAP1 on a second polymer containing product PROD2. The first polymer containing product PROD1, PROD11, PROD12 may be configured to have reflection symmetry, such that a plane of symmetry may be drawn which divides first polymer containing product PROD1, PROD11, PROD12 into two halves which are mirror images of each other. The protrusion APP1, APP2 may be configured to have reflection symmetry, such that a plane of symmetry parallel may be drawn which divides the protrusion APP1, APP2 into two halves which are mirror images of each other.

The length L_{APP} of the protrusion APP1, APP2 may be proportional to the length L100 of the substantially planar side SURF3. The length L_{APP} of the protrusion APP1, APP2 may be, for example, less than 40% of the length L100 of the substantially planar side SURF3. Preferably the length of the protrusion APP1, APP2 may be in the range of 1 to 40% of the length of the substantially planar side SURF3. The length L_{APP} of the protrusion APP1, APP2 may be adapted to the width W_{GAP} of the hollow section GAP1 such that L_{APP} ≤ W_{GAP}.

The width W_{APP} of the protrusion APP1, APP2 may be proportional to the width W100 of the substantially planar side SURF3. The width W_{APP} of the protrusion APP1, APP2 may be, for example, less than 80% of the width W100 of the substantially planar side SURF3. Preferably the width of the protrusion APP1, APP2 may be in the range of 30 to 80% of the width of the substantially planar side SURF3. The width W_{APP} of the protrusion APP1, APP2 may be adapted to the height H_{GAP} of the hollow section GAP1 such that W_{APP} ≤ H_{GAP}.

The minimum distance D_{APP} along the length W200 between two adjacent protrusions APP1, APP2 on a first polymer containing product PROD1 may be selected such that the minimum distance D_{APP} is matched with position of the hollow sections GAP1 on a second polymer containing product PROD2. The minimum distance D_{GAP} may be a distance between hollow sections GAP1 of two adjacent second polymer containing products PROD2.

The height H_{APP} of the protrusion APP1, APP2 may be proportional to the width W100 of the substantially planar side SURF3. The height H_{APP} of the protrusion APP1, APP2 may be, for example, equal to or less than 3 times of the width W100 of the substantially planar side SURF3. The height of the protrusion APP1, APP2 may be in the range of 50 to 300% of the width of the substantially planar side SURF3. The height H_{APP} may be equal to or less than 40 millimeters, such as in the range of 5 to 30 millimeters, preferably in the range of 15 to 25 millimeters.

The length L100 and height H_{PLT} of the body PLT1, PLT2, PLT3 may vary, depending of the use of the first polymer containing product. When used as an end cap, the height H_{PLT} of the body PLT2, PLT3 may be from few millimeters to tens of millimeters, such as in the range of 0.5 to 30 millimeters, preferably in the range of 1 to 10 millimeters, most preferably in the range of 2 to 4 millimeters. When used as an connection part for one or more polymer containing products PROD2 having a hollow section GAP1, the height H_{PLT} of the body PLT1, may be in equal to or less than the cross dimensional height H200 of the second polymer containing product PROD2. When the first polymer containing product is used as an end cap to cover the end END1 of a second polymer containing product, the length L100 may be equal to or more than the width W200 of the second polymer containing product. When the first polymer containing product is used as a side strip RIM1, the length L100 may be equal to or less than the length of the second polymer containing product. When the first polymer containing product is used to connect together two or more second polymer containing products having hollow sections GAP1, the length L100 may be equal to or more than the height H200 of a second polymer containing product.

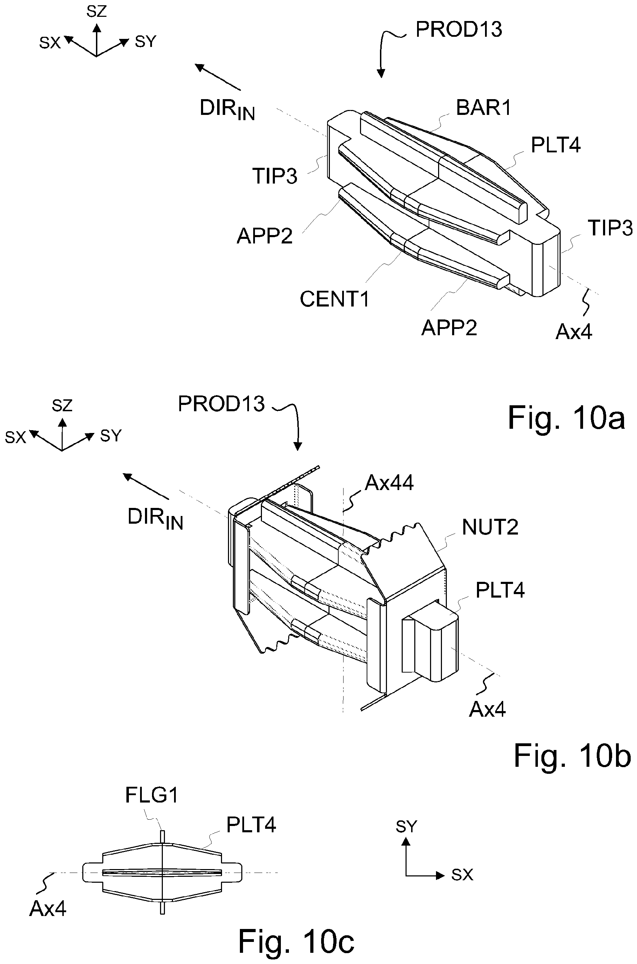

Figs. 10a, 10b and 10c show, by way of examples, an example of a first polymer containing product PROD13 having protrusions.

The first polymer containing product PROD13 having protrusions may be used as a connecting part with a fastening device NUT2. The polymer containing product PROD13 is suitable to be used for forming an interlocking push-in coupling between two second polymer containing products PROD2 having a hollow section GAP1. The polymer containing product PROD13 may have a body (PLT4) consisting substantially of:
- a pair of self-similar protrusions APP2 ending at a tip TIP3,
- the pair of self-similar protrusions APP2 joined together at middle CENT1,
- the protrusions configured to extend from the middle CENT1 in opposite directions along a longitudinal axis Ax4 such that the protrusions APP2 are concentric to each other along the longitudinal axis Ax4,
- each protrusion comprising one or more supporting elements BAR1 between the tip TIP3 of the protrusion APP2 and the middle CENT1 of the body PLT4,
- wherein the supporting elements BAR1 have been configured to act as stoppers for orienting a fastening device NUT2 such that when the fastening device NUT2 is mounted on the protrusion APP2, the fastening device NUT1, NUT2 forms a first self-tightening joint with the protrusion APP1, APP2, and is oriented in an insertion direction DIR_{IN} substantially parallel to the longitudinal axis Ax4.

The supporting element BAR1 may be a base configured to act as a counterpart for a base plate of the fastening device NUT2. The supporting element BAR1 may form an edge or a shoulder, configured to act as counterparts for positioning a fastening device NUT2 such that when the fastening device NUT2 is mounted on the protrusion APP2, the fastening device NUT1, NUT2 forms a first self-tightening joint with the protrusion APP1, APP2, and is oriented in an insertion direction DIR_{IN} substantially parallel to the longitudinal axis Ax4.

The polymer containing product PROD13 may be configured such that the pair of self-similar protrusions are self-similar to each other. The fastening device NUT1, NUT2, NUT3 used with the first polymer containing product PROD13 may be selected by the shape of the protrusion APP1, APP2 as shown in Figs 6d and 6e to be suitable for forming an interlocking push-in coupling. The polymer containing product PROD13 may be configured to comprise a cross sectional area of the body PLT4 at the middle CENT1 equal to or greater than the cross sectional area at the tip TIP3, when measured perpendicular to the longitudinal axis Ax4. The polymer containing product PROD13 may be configured such that each protrusion is configured to form a truncated cone. The polymer containing product PROD13 may be configured such that the pair of protrusions APP2 are symmetric to each other with respect to a reflection plane, wherein the reflection plane is parallel to the longitudinal axis Ax4 or to a transversal axis Ax44 perpendicular to the longitudinal axis Ax4. The polymer containing product PROD13 may be configured such that the cross sectional area of the body PLT4 from the middle CENT1 towards the tip TIP3 decreases, when measured perpendicular to the longitudinal axis Ax4. The polymer containing product PROD13 may be arranged to comprise a flange FLG1 at the middle CENT1 configured to act as a stopper limiting the penetration depth of a protrusion APP2, when the protrusion APP2 is pushed into a hollow section of a second polymer containing product PROD2. The flange FLG1 may be formed by one or more elements extending from the middle CENT1 of the body PLT4 substantially perpendicular to the longitudinal axis Ax4. Alternatively, the flange FLG1 may be a circumferential element extending from the middle CENT1 of the body PLT4 perpendicular to the longitudinal axis Ax4 and surrounding the body PLT4. The thickness of the flange FLG1 parallel to the longitudinal axis Ax4 may be equal to or less than 5% of the length of the body parallel to the longitudinal axis Ax4. The polymer containing product PROD13 may be configured such that the width W_{APP} of the protrusion APP2 is less than 80%, preferably less than 50% of the length L_{APP} of the protrusion APP2 substantially perpendicular to the width W_{APP}.

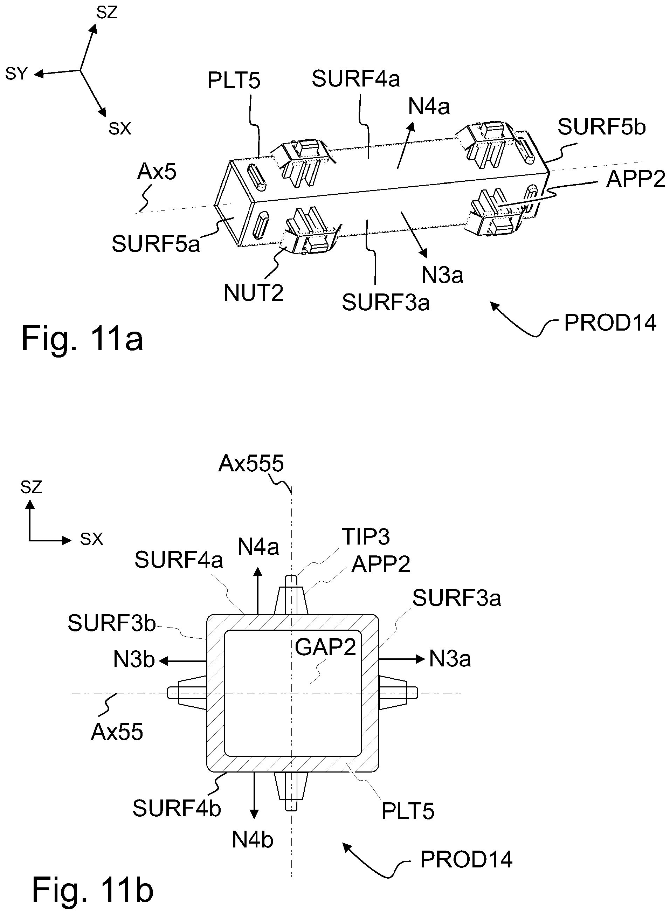

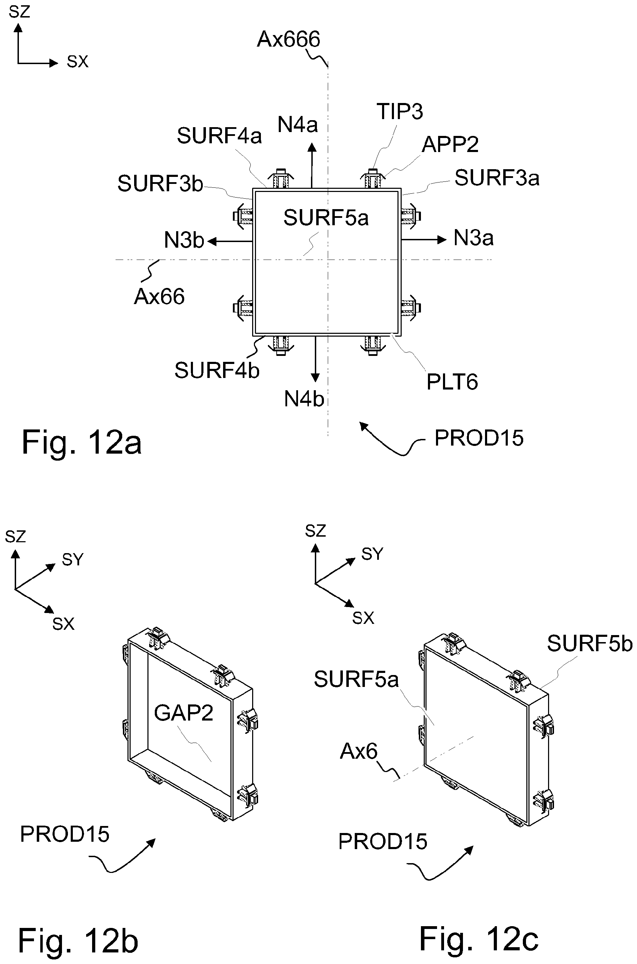

Figs. 11a and 11b show, by way of examples, an example of a first polymer containing product PROD14 having protrusions aligned along a line substantially parallel with the longitudinal axis of the product PROD14 . Figs. 12a, 12b and 12c show, by way of examples, a variation of this example wherein a first polymer containing product PROD15 has protrusions aligned along a line substantially perpendicular to the longitudinal axis of the product PROD15.

The first polymer containing product PROD14, PROD15 having protrusions may be used as a connecting part with a fastening device NUT2. The polymer containing product PROD14, PROD15 is suitable to be used for forming an interlocking push-in coupling between a number of second polymer containing products PROD2 having a hollow section GAP1, wherein the number may be in the range of 1 to 6, preferably between 2 to 4. The first polymer containing product PROD14, PROD15 enables forming multiple interlocking push-in couplings such that the second polymer containing products PROD2 may be connected together via the first polymer containing product PROD14, PROD15 in right angle. In addition, the second polymer containing products PROD2 may be connected together via the first polymer containing product PROD14, PROD15 such that each end END1 of the second polymer containing products PROD2 is facing the first polymer containing product PROD14, PROD15. The second polymer containing products PROD2 may be connected together via the first polymer containing product PROD14 such that that the heights H200 of second polymer containing products PROD2 facing each other are parallel to each other, but perpendicular to the heights H200 of flanking second polymer containing products PROD2. The second polymer containing products PROD2 may alternatively be connected together via the first polymer containing product PROD15 such that that the heights H200 of the second polymer containing product PROD2 are parallel to one another. For the shape and configuration of the protrusions, reference is made to Figures 6d and 6e showing some possible variations of the protrusions.

A polymer containing product PROD14, PROD15 suitable to be used for forming an interlocking push-in coupling between a number of second polymer containing products PROD2 having a hollow section GAP1 may comprise a body PLT5, PLT6 having
- two pairs of opposite sides SURF3a, SURF3b, SURF4a, SURF4b parallel to a longitudinal axis Ax5, Ax6,
- the opposite sides forming four flanking sides of the body,
- one of the flanking sides is substantially perpendicular to an adjacent flanking side of the flanking sides,
- wherein at least two or more of the flanking sides each comprise one or more protrusions APP2 extending outwards substantially parallel to the normal N3a, N3b, N4a, N4b of the surface of the flanking side SURF3a, SURF3b, SURF4a, SURF4b from which the protrusion APP2 extends towards a tip TIP3 of the protrusion APP2, and
- wherein the protrusion APP2 comprises one or more supporting elements PIT1, BAR1 between the tip TIP1, TIP2, TIP3 of the protrusion APP1, APP2 and the flanking side from which the protrusion extends, and
- wherein the supporting elements PIT1, BAR1 have been configured to act as counterparts for positioning a fastening device NUT2 such that when the fastening device NUT2 is mounted on the protrusion APP2, the fastening device NUT2 forms a first self-tightening joint with the protrusion APP2 and is oriented in an insertion direction DIR_{IN} substantially parallel with the normal N3a, N3b, N4a, N4b of the flanking side.

The polymer containing product PROD14, PROD15 may be configured such that each pair of opposite sides comprising two sides SURF3a, SURF3b, SURF4a, SURF4b, said sides being parallel to each other. The supporting element PIT1, BAR1 may be a base configured to act as a counterpart for a base plate of the fastening device NUT2. The supporting element PIT1, BAR1may form an edge or a shoulder configured to function as a counterpart for a base plate of the fastening device NUT1, NUT2, NUT3. The polymer containing product PROD14, PROD15 may be configured such that the polymer containing product PROD14, PROD15 is configured to have reflection symmetry, such that a plane of symmetry is configured to divide the polymer containing product PROD14, PROD15 into two pieces which are mirror images of each other. The polymer containing product PROD14 may be configured to comprise two or more protrusions APP2 on each flanking side SURF3a, SURF3b, SURF4a, SURF4b, wherein the protrusions APP2 have been aligned along a line substantially parallel with the longitudinal axis Ax5 of the body PLT5 such that the protrusions APP2 are in line along the longitudinal axis Ax5. The polymer containing product PROD15 may be configured to comprise two or more protrusions APP2 on each flanking side SURF3a, SURF3b, SURF4a, SURF4b and wherein the protrusions APP2 have been aligned along a line Ax66, Ax666 substantially perpendicular to the longitudinal axis Ax6 of the body PLT6 such that the protrusions APP2 are in line along the line Ax66, Ax666 substantially perpendicular to the longitudinal axis Ax6. The polymer containing product PROD14, PROD15 may be configured such that the number of second polymer containing products PROD2 having a hollow section GAP1 is between 1 and 6, preferably between 2 and 6, most preferably 2, 3 or 4. The polymer containing product PROD14, PROD15 may be configured such that the body PLT5, PLT6 is solid. The polymer containing product PROD14, PROD15 may be configured such that the body PLT5, PLT6 comprises a first end SURF5a and a second end SURF5b opposite each other, and substantially perpendicular to the opposite sides forming the four flanking sides of the body. The polymer containing product PROD14, PROD15 may be configured such that the first end SURF5a or the second end SURF5b comprises a hollow section GAP2. The polymer containing product PROD14, PROD15 may be configured such that the first end SURF5a and the second end SURF5b comprises a hollow section GAP2. The polymer containing product PROD14, PROD15 may be configured such that body PLT5, PLT6 comprises a hollow section GAP2 extending through the body substantially parallel with the longitudinal axis Ax5, Ax6 of the body PLT5, PLT6. The polymer containing product PROD14, PROD15 may be configured such that the first end SURF5a and the second end SURF5b comprise a substantially planar and solid surface. The polymer containing product PROD14, PROD15 may be configured such that the first end SURF5a or the second end SURF5b comprises a protrusion for connecting the polymer containing product PROD14, PROD15 into another polymer containing product PROD14, PROD15 comprising a hollow section GAP2. The polymer containing product PROD14, PROD15 may be configured such that the body PLT5, PLT6 has a shape of a substantially rectangular cuboid.

The elements on the fastening device have been configured to enable a two-directional installation of the fastening device such that a push-in coupling between polymer containing products may be formed. The elements on the fastening device have further been configured to enable an interlocking structure, such that a first pair of flexible joints is configured to press the first pair of blade elements against the first polymer containing product to form a first self-tightening joint, and a second pair of flexible joints is configured to press the second pair of blade elements against the second polymer containing product to form a second self-tightening joint. The first and second pair of flexible joints may be arranged to act as springs configured to resist the release of the fastening device from the first and second polymer containing products. The fastening device and the easy assembly of the push-in coupling have various uses, such as the examples given below.

The fastening device NUT1, NUT2, NUT3 may be used to form an interlocking push-in coupling between a first polymer containing product PROD1, PROD 11, PROD12 having a protrusion APP1, APP2 and a second polymer containing product PROD2 having a hollow section GAP1.

The fastening device NUT1, NUT2, NUT3 may be used in a combination comprising a first polymer containing product PROD1, PROD 11, PROD12 having a protrusion APP1, APP2 and a second polymer containing product PROD2 having a hollow section GAP1.

The first polymer containing product PROD1, PROD 11, PROD12 having a protrusion APP1, APP2 may be used to form an interlocking push-in coupling with a fastening device NUT1, NUT2, NUT3 and a second polymer containing product PROD2 having a hollow section GAP1.

The first polymer containing product PROD1, PROD 11, PROD12 having a protrusion APP1, APP2 may be used as an end cap for the second polymer containing product PROD2.

The first polymer containing product PROD1, PROD 11, PROD12 having a protrusion APP1, APP2 may be used as a cover strip for the second polymer containing product PROD2.

The first polymer containing product PROD1, PROD 11, PROD12 having a protrusion APP1, APP2 may be used as a connecting part for one or more second polymer containing products PROD2 having a hollow section GAP1.

The first polymer containing product PROD1, PROD 11, PROD12 having a protrusion APP1, APP2 may be used to form an interlocking push-in coupling with two or more polymer containing products PROD2 having a hollow section GAP1 such that the formed combination COMB1 comprises two or more the second polymer containing product PROD2 having a hollow section GAP1.

The first polymer containing product PROD1, PROD 11, PROD12 having a protrusion APP1, APP2 may be used to form a combination COMB1 configured to rotate about an axis of the first polymer containing product PROD1, PROD 11, PROD12, such as longitudinal axis along the length of the first polymer containing product PROD1, PROD 11, PROD12.

For the person skilled in the art, it will be clear that modifications and variations of the devices according to the present invention are perceivable. The figures are schematic. The particular embodiments described above with reference to the accompanying drawings are illustrative only and not meant to limit the scope of the invention, which is defined by the appended claims.

## Claims

1. A fastening device (NUT1, NUT2, NUT3) suitable to be used for forming an interlocking push-in coupling between a first polymer containing product (PROD1, PROD11, PROD12, PROD13, PROD14, PROD15) having a protrusion (APP1, APP2) and a second polymer containing product (PROD2) having a hollow section (GAP1), the fastening device comprising:
- a base plate (BAS1, BAS2, BAS3) having a first pair of opposite sides, a second pair of opposite sides, a first surface (SURF1) and a second surface (SURF2);
- a first pair of blade elements (10a, 10b, 20a, 20b, 30a, 30b) extending from sides of the first pair of the opposite sides;
- a second pair of blade elements (12a, 12b, 22a, 22b, 32a, 32b); whereby
- the first pair of blade elements is connected to the base plate by a first pair of flexible joints forming a first acute angle α between the normal (N1) of the first surface (SURF1);
- the second pair of blade elements is connected to the base plate by a second pair of flexible joints forming a second acute angle β between the normal (N2) of the second surface (SURF2); and
- when mounted on the protrusion (APP1, APP2) of the first polymer containing product (PROD1, PROD11, PROD12, PROD13, PROD14, PROD15), the first pair of flexible joints is configured to press the first pair of blade elements against the first polymer containing product (PROD1, PROD11, PROD12, PROD13, PROD14, PROD15) to form a first joint (JOINT1); and
- when pushed into the hollow section (GAP1) of the second polymer containing product (PROD2), the second pair of flexible joints is configured to press the second pair of blade elements against the second polymer containing product (PROD2) to form a second self-tightening joint (JOINT2);
**characterized in that**
- the second pair of blade elements (12a, 12b, 22a, 22b, 32a, 32b) extends from sides of the second pair of the opposite sides; and
- the first joint (JOINT1) is a self-tightening joint.

2. The fastening device according to claim 1, wherein the first pair of blade elements comprise edges (11a, 11b, 21a, 21b, 31a, 31b), which edges when mounted on the first polymer containing product (PROD1, PROD11, PROD12, PROD13, PROD14, PROD15) are configured to press against the first polymer containing product (PROD1, PROD11, PROD12, PROD13, PROD14, PROD15).

3. The fastening device according to claim 1 or 2, wherein the second pair of blade elements comprise edges (13a, 13b, 23a, 23b, 33a, 33b), which edges when mounted on the second polymer containing product (PROD2) are configured to press against the second polymer containing product (PROD2).

4. The fastening device according to any of the previous claims, wherein the first acute angle α between the normal (N1) of the first surface (SURF1) or the second acute angle β between the normal (N2) of the second surface (SURF2) is in the range of 5 to 85 degrees, preferably in the range of 10 to 80 degrees, most preferably in the range of 30 to 60 degrees, prior to mounting the fastening device on the first polymer containing product (PROD1, PROD11, PROD12, PROD13, PROD14, PROD15) or pushing the fastening device into the second polymer containing product (PROD2).

5. The fastening device according to any of the previous claims, comprising a through-hole (OP1, OP2, OP3) arranged on the base plate (BAS1, BAS2, BAS3) such that when mounted on the first polymer containing product (PROD1), the through-hole (OP1, OP2, OP3) orients the fastening device in relation to the first polymer containing product (PROD1, PROD11, PROD12, PROD13, PROD14, PROD15).

6. The fastening device according to any of the previous claims, wherein the fastening device is formed of a resilient material, preferably of material having a modulus or resilience in the range of 30 to 4500 kJ/m³, most preferably of spring steel having a modulus or resilience equal to or higher than 300 kJ/m³, such that the first pair of flexible joints act as springs configured to resist the release of the fastening device from the first polymer containing product (PROD1, PROD11, PROD12, PROD13, PROD14, PROD15) and the second pair of flexible joints act as springs configured to resist the release of the fastening device from the second polymer containing product (PROD2).

7. The fastening device according to any of the claims 2 to 6, wherein the fastening device has an insertion direction (DIR_{IN}) substantially parallel with the normal (N1) of the first surface (SURF1) configured to orient the second pair of blade elements, such that when pushed into the second polymer containing product (PROD2), the second pair of flexible joints enter the hollow section (GAP1) before the edges (13a, 13b, 23a, 23b, 33a, 33b) of the second pair of blade elements.

8. The fastening device according to any of the previous claims, wherein the base plate (BAS1, BAS2, BAS3) has a substantially rectangular shape, such that the base plate comprises a first pair of outer sides and a second pair of outer sides, wherein the first pair of outer sides is substantially perpendicular to the second pair of outer sides.

9. The fastening device according to any of the previous claims, wherein the second pair of opposite sides are outer sides of the base plate (BAS1, BAS2, BAS3) such that a pair of outer sides of the base plate (BAS1, BAS2, BAS3) form the connection points of the second pair of flexible joints.

10. The fastening device according to claim 9, wherein the first pair of opposite sides are outer sides of the base plate (BAS1, BAS2, BAS3) such that the outer sides of the base plate (BAS1, BAS2, BAS3) form the connection points of the first pair and the second pair of flexible joints.

11. The fastening device according to any of the previous claims, comprising a pair of bracing elements (24a, 24b, 34a, 34b) for stiffening the profile of the base plate (BAS2, BAS3).

12. The fastening device according to any of the previous claims, wherein the fastening device has been formed of a single piece of material, for example by cutting and bending the material into shape.

13. The fastening device according to any of the previous claims, wherein the fastening device comprises a first part comprising the first pair of blade elements (10a, 10b, 20a, 20b, 30a, 30b) and a second part comprising the second pair of blade elements (12a, 12b, 22a, 22b, 32a, 32b), the first part and the second part configured to be interlocked against each other by pressing such that when the second part and then the first part is mounted on the protrusion (APP1, APP2) of the first polymer containing product (PROD1, PROD11, PROD12, PROD13, PROD14, PROD15) and then pushed into the hollow section (GAP1) of the second polymer containing product (PROD2), the first part and the second press against each other and form an interlocking push-in coupling comprising the first and the second self-tightening joints.

14. The fastening device according to any of the previous claims, wherein the first pair of blade elements (10a, 10b, 20a, 20b, 30a, 30b) and the second pair of blade elements (12a, 12b, 22a, 22b, 32a, 32b) are on opposite surfaces of a surface plane parallel to the first surface (SURF1) and the second surface (SURF2) of the base plate (BAS1, BAS2, BAS3) such that the fastening device comprises an interlocking shape suitable to be used for forming an interlocking push-in coupling between a first polymer containing product (PROD1, PROD11, PROD12, PROD13, PROD14, PROD15) having a protrusion (APP1, APP2) and a second polymer containing product (PROD2) having a hollow section (GAP1).

15. The fastening device according to any of the previous claims, wherein the fastening device is a single-use fastening device such that the fastening device is configured to form a non-releasable push-in coupling when pushed into the hollow section (GAP1) of the second polymer containing product (PROD2).

16. A combination (COMB1) suitable to be used for forming an interlocking push-in coupling, the combination comprising a fastening device (NUT1, NUT2, NUT3) according to any of the claims 1 to 15 and a first polymer containing product (PROD1, PROD11, PROD12).

## Patentansprüche

1. Befestigungsvorrichtung (NUT1, NUT2, NUT3), die geeignet ist, um zur Bildung einer ineinandergreifenden Steckverbindung zwischen einem ersten polymerhaltigen Produkt (PROD1, PROD11, PROD12, PROD13, PROD14, PROD15) mit einem Vorsprung (APP1, APP2) und einem zweiten polymerhaltigen Produkt (PROD2) mit einem hohlen Abschnitt (GAP1) verwendet zu werden, wobei die Befestigungsvorrichtung Folgendes aufweist:
- eine Grundplatte (BAS1, BAS2, BAS3) mit einem ersten Paar von gegenüberliegenden Seiten, einem zweiten Paar von gegenüberliegenden Seiten, einer ersten Oberfläche (SURF1) und einer zweiten Oberfläche (SURF2);
- ein erstes Paar von Flügelelementen (10a, 10b, 20a, 20b, 30a, 30b), die sich von Seiten des ersten Paars der gegenüberliegenden Seiten erstrecken;
- ein zweites Paar von Flügelelementen (12a, 12b, 22a, 22b, 32a, 32b); wobei
- das erste Paar von Flügelelementen mit der Grundplatte durch ein erstes Paar von flexiblen Verbindungen verbunden ist, die einen ersten spitzen Winkel α zwischen der Normalen (N1) der ersten Oberfläche (SURF1) bilden;
- das zweite Paar von Flügelelementen mit der Grundplatte durch ein zweites Paar von flexiblen Verbindungen verbunden ist, die einen zweiten spitzen Winkel β zwischen der Normalen (N2) der zweiten Oberfläche (SURF2) bilden; und
- wenn das erste Paar flexibler Verbindungen auf dem Vorsprung (APP1, APP2) des ersten polymerhaltigen Produkts (PROD1, PROD11, PROD12, PROD13, PROD14, PROD15) angebracht ist, es so konfiguriert ist, dass es das erste Paar von Flügelelementen gegen das erste polymerhaltige Produkt (PROD1, PROD11, PROD12, PROD13, PROD14, PROD15) drückt, um eine erste Verbindung (JOINT1) zu bilden; und
- wenn das zweite Paar flexibler Verbindungen in den hohlen Abschnitt (GAP1) des zweiten polymerhaltigen Produkts (PROD2) geschoben wird, es so konfiguriert ist, dass es das zweite Paar von Flügelelementen gegen das zweite polymerhaltige Produkt (PROD2) drückt, um eine zweite selbstspannende Verbindung (JOINT2) zu bilden; **dadurch gekennzeichnet, dass**
- sich das zweite Paar von Flügelelementen (12a, 12b, 22a, 22b, 32a, 32b) von Seiten des zweiten Paares der gegenüberliegenden Seiten erstreckt; und
- die erste Verbindung (JOINT1) eine selbstspannende Verbindung ist.

2. Befestigungsvorrichtung nach Anspruch 1, wobei das erste Paar von Flügelelementen Ränder (11a, 11b, 21a, 21b, 31a, 31b) aufweist, wobei die Ränder, wenn sie an dem ersten polymerhaltigen Produkt (PROD1, PROD11, PROD12, PROD13, PROD14, PROD15) angebracht sind, so konfiguriert sind, dass sie gegen das erste polymerhaltige Produkt (PROD1, PROD11, PROD12, PROD13, PROD14, PROD15) drücken.

3. Befestigungsvorrichtung nach Anspruch 1 oder 2, wobei das zweite Paar von Flügelelementen Ränder (13a, 13b, 23a, 23b, 33a, 33b) aufweist, wobei die Ränder, wenn sie an dem zweiten polymerhaltigen Produkt (PROD2) angebracht sind, so konfiguriert sind, dass sie gegen das zweite polymerhaltige Produkt (PROD2) drücken.

4. Befestigungsvorrichtung nach einem der vorhergehenden Ansprüche, wobei der erste spitze Winkel α zwischen der Normalen (N1) der ersten Oberfläche (SURF1) oder der zweite spitze Winkel β zwischen der Normalen (N2) der zweiten Oberfläche (SURF2) im Bereich von 5 bis 85 Grad liegt, vorzugsweise im Bereich von 10 bis 80 Grad, am meisten bevorzugt im Bereich von 30 bis 60 Grad, bevor die Befestigungsvorrichtung auf das erste polymerhaltige Produkt (PROD1, PROD11, PROD12, PROD13, PROD14, PROD15) montiert oder in das zweite polymerhaltige Produkt (PROD2) eingeschoben wird.

5. Befestigungsvorrichtung nach einem der vorhergehenden Ansprüche, das ein Durchgangsloch (OP1, OP2, OP3) aufweist, das auf der Grundplatte (BAS1, BAS2, BAS3) so angeordnet ist, dass, wenn sie auf dem ersten polymerhaltigen Produkt (PROD1) montiert ist, das Durchgangsloch (OP1, OP2, OP3) die Befestigungsvorrichtung in Bezug auf das erste polymerhaltige Produkt (PROD1, PROD11, PROD12, PROD13, PROD14, PROD15) ausrichtet.

6. Befestigungsvorrichtung nach einem der vorhergehenden Ansprüche, wobei die Befestigungsvorrichtung aus einem elastischen Material gebildet ist, vorzugsweise aus einem Material mit einem Modul oder einer Elastizität im Bereich von 30 bis 4500 kJ/m³, am meisten bevorzugt aus Federstahl mit einem Modul oder einer Elastizität gleich oder höher als 300 kJ/m³, so dass das erste Paar flexibler Verbindungen als Federn wirkt, die so konfiguriert sind, dass sie dem Lösen der Befestigungsvorrichtung von dem ersten polymerhaltigen Produkt (PROD1, PROD11, PROD12, PROD13, PROD14, PROD15) widerstehen, und das zweite Paar flexibler Verbindungen als Federn wirkt, die so konfiguriert sind, dass sie dem Lösen der Befestigungsvorrichtung von dem zweiten polymerhaltigen Produkt (PROD2) widerstehen.

7. Befestigungsvorrichtung nach einem der Ansprüche 2 bis 6, wobei die Befestigungsvorrichtung eine Einführrichtung (DIR_{IN}) aufweist, die im Wesentlichen parallel zur Normalen (N1) der ersten Oberfläche (SURF1) verläuft, die so konfiguriert ist, dass sie das zweite Paar Flügelelemente ausrichtet, so dass das zweite Paar flexibler Verbindungen beim Einschieben in das zweite polymerhaltige Produkt (PROD2) in den hohlen Abschnitt (GAP1) vor den Rändern (13a, 13b, 23a, 23b, 33a, 33b) des zweiten Paares von Flügelelementen eintritt.

8. Befestigungsvorrichtung nach einem der vorhergehenden Ansprüche, wobei die Grundplatte (BAS1, BAS2, BAS3) eine im Wesentlichen rechteckige Form aufweist, so dass die Grundplatte ein erstes Paar von Außenseiten und ein zweites Paar von Außenseiten aufweist, wobei das erste Paar von Außenseiten im Wesentlichen senkrecht zu dem zweiten Paar von Außenseiten ist.

9. Befestigungsvorrichtung nach einem der vorhergehenden Ansprüche, wobei das zweite Paar gegenüberliegender Seiten Außenseiten der Grundplatte (BAS1, BAS2, BAS3) sind, so dass ein Paar von Außenseiten der Grundplatte (BAS1, BAS2, BAS3) die Verbindungspunkte des zweiten Paares von flexiblen Verbindungen bilden.

10. Befestigungsvorrichtung nach Anspruch 9, wobei das erste Paar gegenüberliegender Seiten Außenseiten der Grundplatte (BAS1, BAS2, BAS3) sind, so dass die Außenseiten der Grundplatte (BAS1, BAS2, BAS3) die Verbindungspunkte des ersten Paares und des zweiten Paares flexibler Verbindungen bilden.

11. Befestigungsvorrichtung nach einem der vorhergehenden Ansprüche, das ein Paar von aussteifenden Elementen (24a, 24b, 34a, 34b) zur Versteifung des Profils der Grundplatte (BAS2, BAS3) aufweist.

12. Befestigungsvorrichtung nach einem der vorhergehenden Ansprüche, wobei die Befestigungsvorrichtung aus einem einzigen Materialstück z. B. durch Schneiden und In-Form-Biegen des Materials gebildet wurde.

13. Befestigungsvorrichtung nach einem der vorhergehenden Ansprüche, wobei die Befestigungsvorrichtung einen ersten Teil mit dem ersten Paar von Flügelelementen (10a, 10b, 20a, 20b, 30a, 30b) und einen zweiten Teil mit dem zweiten Paar von Flügelelementen (12a, 12b, 22a, 22b, 32a, 32b) aufweist, wobei der erste Teil und der zweite Teil so konfiguriert sind, dass sie durch Drücken gegeneinander verriegelt werden, so dass, wenn der zweite Teil und dann der erste Teil auf dem Vorsprung (APP1, APP2) des ersten polymerhaltigen Produkts (PROD1, PROD11, PROD12, PROD13, PROD14, PROD15) montiert und dann in den hohlen Abschnitt (GAP1) des zweiten polymerhaltigen Produkts (PROD2) geschoben wird, der erste Teil und der zweite Teil gegeneinander drücken und eine ineinandergreifende Steckverbindung bilden, die die erste und die zweite selbstspannende Verbindung aufweist.

14. Befestigungsvorrichtung nach einem der vorhergehenden Ansprüche, wobei sich das erste Paar von Flügelelementen (10a, 10b, 20a, 20b, 30a, 30b) und das zweite Paar von Flügelelementen (12a, 12b, 22a, 22b, 32a, 32b) auf gegenüberliegenden Oberflächen einer Oberflächenebene parallel zur ersten Oberfläche (SURF1) und der zweiten Oberfläche (SURF2) der Grundplatte (BAS1, BAS2, BAS3) befinden, so dass die Befestigungsvorrichtung eine ineinandergreifende Form aufweist, die geeignet ist, zur Bildung einer ineinandergreifenden Steckverbindung zwischen einem ersten polymerhaltigen Produkt (PROD1, PROD11, PROD12, PROD13, PROD14, PROD15) mit einem Vorsprung (APP1, APP2) und einem zweiten polymerhaltigen Produkt (PROD2) mit einem hohlen Abschnitt (GAP1) verwendet zu werden.

15. Befestigungsvorrichtung nach einem der vorhergehenden Ansprüche, wobei die Befestigungsvorrichtung eine Einweg-Befestigungsvorrichtung ist, so dass die Befestigungsvorrichtung so konfiguriert ist, dass sie eine nichtlösbare Steckverbindung bildet, wenn sie in den hohlen Abschnitt (GAP1) des zweiten polymerhaltigen Produkts (PROD2) eingeschoben wird.

16. Eine Kombination (COMBI), die geeignet ist, zur Bildung einer ineinandergreifenden Steckverbindung verwendet zu werden, wobei die Kombination eine Befestigungsvorrichtung (NUT1, NUT2, NUT3) nach einem der Ansprüche 1 bis 15 und ein erstes polymerhaltiges Produkt (PROD1, PROD11, PROD12) aufweist.

## Revendications

1. Dispositif de fixation (NUT1, NUT2, NUT3) convenant pour être utilisé pour former un couplage par poussée à interverrouillage entre un premier produit contenant un polymère (PROD1, PROD11, PROD12, PROD13, PROD14, PROD15) qui comporte une protubérance (APP1, APP2) et un second produit contenant un polymère (PROD2) qui comporte une section creuse (GAP1), le dispositif de fixation comprenant :
- une plaque de base (BAS1, BAS2, BAS3) qui comporte une première paire de côtés opposés, une seconde paire de côtés opposés, une première surface (SURF1) et une seconde surface (SURF2) ;
- une première paire d'éléments de pale (10a, 10b, 20a, 20b, 30a, 30b) qui sont étendus depuis des côtés de la première paire des côtés opposés ; et
- une seconde paire d'éléments de pale (12a, 12b, 22a, 22b, 32a, 32b) ;
dans lequel :
- la première paire d'éléments de pale est connectée à la plaque de base par une première paire de joints souples qui forment un premier angle aigu α par rapport à la normale (N1) à la première surface (SURF1) ;
- la seconde paire d'éléments de pale est connectée à la plaque de base par une seconde paire de joints souples qui forment un second angle aigu β par rapport à la normale (N2) à la seconde surface (SURF2) ; et
- lorsqu'elle est montée sur la protubérance (APP1, APP2) du premier produit contenant un polymère (PROD1, PROD11, PROD12, PROD13, PROD14, PROD15), la première paire de joints souples est configurée pour presser la première paire d'éléments de pale contre le premier produit contenant un polymère (PROD1, PROD11, PROD12, PROD13, PROD14, PROD15) afin de former un premier joint (JOINT1) ; et
- lorsqu'elle est poussée à l'intérieur de la section creuse (GAP1) du second produit contenant un polymère (PROD2), la seconde paire de joints souples est configurée pour presser la seconde paire d'éléments de pale contre le second produit contenant un polymère (PROD2) afin de former un second joint à auto-serrage (JOINT2) ;
**caractérisé en ce que** :
- la seconde paire d'éléments de pale (12a, 12b, 22a, 22b, 32a, 32b) est étendue depuis des côtés de la seconde paire des côtés opposés ; et
- le premier joint (JOINT1) est un joint à auto-serrage.

2. Dispositif de fixation selon la revendication 1, dans lequel la première paire d'éléments de pale comprend des bords (11a, 11b, 21a, 21b, 31a, 31b), lesquels bords, lorsqu'ils sont montés sur le premier produit contenant un polymère (PROD1, PROD11, PROD12, PROD13, PROD14, PROD15), sont configurés pour exercer une pression contre le premier produit contenant un polymère (PROD1, PROD11, PROD12, PROD13, PROD14, PROD15).

3. Dispositif de fixation selon la revendication 1 ou 2, dans lequel la seconde paire d'éléments de pale comprend des bords (13a, 13b, 23a, 23b, 33a, 33b), lesquels bords, lorsqu'ils sont montés sur le second produit contenant un polymère (PROD2), sont configurés pour exercer une pression contre le second produit contenant un polymère (PROD2).

4. Dispositif de fixation selon l'une quelconque des revendications précédentes, dans lequel le premier angle aigu α par rapport à la normale (N1) à la première surface (SURF1) ou le second angle aigu β par rapport à la normale (N2) à la seconde surface (SURF2) est dans la plage de 5 à 85 degrés, de préférence dans la plage de 10 à 80 degrés, de la façon la plus préférable, dans la plage de 30 à 60 degrés, avant le montage du dispositif de fixation sur le premier produit contenant un polymère (PROD1, PROD11, PROD12, PROD13, PROD14, PROD15) ou avant la poussée du dispositif de fixation à l'intérieur du second produit contenant un polymère (PROD2).

5. Dispositif de fixation selon l'une quelconque des revendications précédentes, comprenant un trou traversant (OP1, OP2, OP3) qui est agencé sur la plaque de base (BAS1, BAS2, BAS3) de sorte que lorsqu'il est monté sur le premier produit contenant un polymère (PROD1), le trou traversant (OP1, OP2, OP3) oriente le dispositif de fixation en relation avec le premier produit contenant un polymère (PROD1, PROD11, PROD12, PROD13, PROD14, PROD15) .

6. Dispositif de fixation selon l'une quelconque des revendications précédentes, dans lequel le dispositif de fixation est formé en un matériau élastique, de préférence en un matériau qui présente un module d'élasticité ou une élasticité dans la plage de 30 à 4 500 kJ/m³, de la façon la plus préférable, en un acier à ressort qui présente un module d'élasticité ou une élasticité égal(e) ou supérieur(e) à 300 kJ/m³, de sorte que les joints de la première paire de joints souples jouent le rôle de ressorts configurés pour résister à la libération du dispositif de fixation par rapport au premier produit contenant un polymère (PROD1, PROD11, PROD12, PROD13, PROD14, PROD15) et que les joints de la seconde paire de joints souples jouent le rôle de ressorts configurés pour résister à la libération du dispositif de fixation par rapport au second produit contenant un polymère (PROD2).

7. Dispositif de fixation selon l'une quelconque des revendications 2 à 6, dans lequel le dispositif de fixation présente une direction d'insertion (DIR_{IN}) qui est sensiblement parallèle à la normale (N1) à la première surface (SURF1) et qui est configurée pour orienter la seconde paire d'éléments de pale de sorte que lorsqu'elle est poussée à l'intérieur du second produit contenant un polymère (PROD2), la seconde paire de joints souples pénètre dans la section creuse (GAP1) avant les bords (13a, 13b, 23a, 23b, 33a, 33b) de la seconde paire d'éléments de pale.

8. Dispositif de fixation selon l'une quelconque des revendications précédentes, dans lequel la plaque de base (BAS1, BAS2, BAS3) présente une forme sensiblement rectangulaire de sorte que la plaque de base comprend une première paire de côtés externes et une seconde paire de côtés externes, dans lequel la première paire de côtés externes est sensiblement perpendiculaire à la seconde paire de côtés externes.

9. Dispositif de fixation selon l'une quelconque des revendications précédentes, dans lequel les côtés opposés de la seconde paire de côtés opposés sont des côtés externes de la plaque de base (BAS1, BAS2, BAS3) de sorte que les côtés externes d'une paire de côtés externes de la plaque de base (BAS1, BAS2, BAS3) forment les points de connexion de la seconde paire de joints souples.

10. Dispositif de fixation selon la revendication 9, dans lequel les côtés opposés de la première paire de côtés opposés sont des côtés externes de la plaque de base (BAS1, BAS2, BAS3) de sorte que les côtés externes de la plaque de base (BAS1, BAS2, BAS3) forment les points de connexion de la première paire et de la seconde paire de joints souples.

11. Dispositif de fixation selon l'une quelconque des revendications précédentes, comprenant une paire d'éléments de renforcement (24a, 24b, 34a, 34b) pour rigidifier le profil de la plaque de base (BAS2, BAS3).

12. Dispositif de fixation selon l'une quelconque des revendications précédentes, dans lequel le dispositif de fixation a été formé à partir d'une unique pièce de matériau, par exemple par découpe et flexion du matériau pour mise en forme.

13. Dispositif de fixation selon l'une quelconque des revendications précédentes, dans lequel le dispositif de fixation comprend une première partie qui comprend la première paire d'éléments de pale (10a, 10b, 20a, 20b, 30a, 30b) et une seconde partie qui comprend la seconde paire d'éléments de pale (12a, 12b, 22a, 22b, 32a, 32b), la première partie et la seconde partie étant configurées pour être interverrouillées l'une contre l'autre par pression de sorte que lorsque la seconde partie puis la première partie sont montées sur la protubérance (APP1, APP2) du premier produit contenant un polymère (PROD1, PROD11, PROD12, PROD13, PROD14, PROD15) puis sont poussées à l'intérieur de la section creuse (GAP1) du second produit contenant un polymère (PROD2), la première partie et la seconde partie exercent une pression l'une contre l'autre et forment un couplage par poussée à interverrouillage qui comprend les premier et second joints à auto-serrage.

14. Dispositif de fixation selon l'une quelconque des revendications précédentes, dans lequel la première paire d'éléments de pale (10a, 10b, 20a, 20b, 30a, 30b) et la seconde paire d'éléments de pale (12a, 12b, 22a, 22b, 32a, 32b) sont sur des surfaces opposées d'un plan de surface qui est parallèle à la première surface (SURF1) et à la seconde surface (SURF2) de la plaque de base (BAS1, BAS2, BAS3) de sorte que le dispositif de fixation comprend une forme à interverrouillage qui convient pour être utilisée pour former un couplage par poussée à interverrouillage entre un premier produit contenant un polymère (PROD1, PROD11, PROD12, PROD13, PROD14, PROD15) qui comporte une protubérance (APP1, APP2) et un second produit contenant un polymère (PROD2) qui comporte une section creuse (GAP1).

15. Dispositif de fixation selon l'une quelconque des revendications précédentes, dans lequel le dispositif de fixation est un dispositif de fixation à usage unique de sorte que le dispositif de fixation est configuré pour former un couplage par poussée non libérable lorsqu'il est poussé à l'intérieur de la section creuse (GAP1) du second produit contenant un polymère (PROD2).

16. Combinaison (COMB1) convenant pour être utilisée pour former un couplage par poussée à interverrouillage, la combinaison comprenant un dispositif de fixation (NUT1, NUT2, NUT3) selon l'une quelconque des revendications 1 à 15 et un premier produit contenant un polymère (PROD1, PROD11, PROD12).
